# EUROPÄISCHE PATENTSCHRIFT

(11) **EP 3 568 327 B1**
(45) Veröffentlichungstag und Bekanntmachung des Hinweises auf die Patenterteilung: **11.05.2022**
(21) Anmeldenummer: 18700864.4
(22) Anmeldetag: 08.01.2018
(51) Int. Cl.: B60T 8/32

(54) **BREMSANLAGE FÜR EIN KRAFTFAHRZEUG UND ZWEI VERFAHREN ZUM BETRIEB DER BREMSANLAGE**
BRAKE SYSTEM FOR A MOTOR VEHICLE AND TWO METHODS FOR OPERATING THE BRAKE SYSTEM
SYSTÈME DE FREINAGE POUR VÉHICULE AUTOMOBILE ET DEUX PROCÉDÉS POUR FAIRE FONCTIONNER CE SYSTÈME DE FREINAGE

(30) Priorität: 11.01.2017 DE 102017200344; 12.12.2017 DE 102017222445
(43) Veröffentlichungstag der Anmeldung: 20.11.2019
(73) Patentinhaber: Continental Teves AG & Co. OHG, 60488 Frankfurt am Main (DE)
(72) Erfinder: ZIMMERMANN, Jochen, 56357 Oberwallmenach (DE); GRIMM, Robert, 65719 Hofheim (DE); BEUSS, Jochen, 64390 Erzhausen (DE); CASPARI, Roland, 60439 Frankfurt am Main (DE)
(74) Vertreter: Continental Corporation
(86) Internationale Anmeldenummer: PCT/EP2018/050327
(87) Internationale Veröffentlichungsnummer: WO 2018/130483

(56) Entgegenhaltungen:
- WO-A1-2012/143312
- WO-A1-2016/000865
- DE-A1- 10 319 338
- DE-A1-102012 210 809
- DE-A1-102013 217 954
- US-A1- 2011 316 327
- US-A1- 2016 009 267

## Beschreibung

Die Erfindung betrifft eine Bremsanlage für ein Kraftfahrzeug gemäß dem Oberbegriff von Anspruch 1 sowie ein Verfahren zu deren Betrieb.

Aus der DE 10 2012 210 809 A1 oder der WO 2012/143312 A1 ist eine zweikreisige Bremsanlage mit einem Tandemhauptbremszylinder, einer ersten elektrisch steuerbaren Druckbereitstellungseinrichtung, welche über ein stromlos geschlossenes Zuschaltventil je Bremskreis mit dem jeweiligen Bremskreis verbunden ist, einer zweiten elektrisch steuerbaren Druckbereitstellungseinrichtung, welche als ein zweikreisiges Motor-Pumpen-Aggregat ausgeführt ist, wobei jede der beiden Pumpen mit einem der beiden Bremskreise verbunden ist, und zwei elektronischen Steuer- und Regeleinheiten zur Ansteuerung dieser Komponenten bekannt.

Aus der DE 10 2013 217 954 A1 ist eine Bremsanlage mit zwei elektrisch steuerbaren Druckquellen sowie einem Hauptbremszylinder für ein Kraftfahrzeug mit vier hydraulisch betätigbaren Radbremsen bekannt. Die Bremsanlage umfasst neben radindividuellen Einlass- und Auslassventilen ein stromlos geschlossenes Kreistrennventil sowie vier Trennventile zur Abtrennung des Hauptbremszylinders und der elektrisch steuerbaren Druckquellen von den Einlassventilen. Das Kreistrennventil trennt in seiner Trennstellung die Bremsanlage in zwei Bremskreise, wobei dem ersten Bremskreis die zwei Vorderradbremsen und dem zweiten Bremskreis die zwei Hinterradbremsen zugeordnet sind. In dem ersten Bremskreis wird ausschließlich von der ersten Druckquelle und in dem zweiten Bremskreis ausschließlich vor der zweiten Druckquellen Bremsdruck aufgebaut. Weiterhin umfasst die Bremsanlage eine zentrale Steuer- und Regeleinheit, eine der ersten Druckquelle zugeordnete erste Steuer- und Regeleinheit und eine der zweiten Druckquelle zugeordnete zweite Steuer- und Regeleinheit. Die erste und zweite Steuer- und Regeleinheit dienen jeweils der Ansteuerung der entsprechenden Druckquelle. Mittels der zentralen Steuer- und Regeleinheit wird das Kreistrennventil betätigt. Weitere Details darüber, durch welche der drei Steuer- und Regeleinheiten die übrigen Ventile betätigt bzw. angesteuert werden, werden in der DE 10 2013 217 954 A1 nicht offenbart. Auch wird in dem Dokument nicht erwähnt, wie die elektrische Zuordnung und elektrische Energieversorgung der drei Steuer- und Regeleinheiten und der ihnen zugeordneten Komponenten ausgeführt ist.

Es ist Aufgabe der vorliegenden Erfindung, eine für des hochautomatisierte Fahren geeignete Bremsanlage sowie ein Verfahren zu dessen Betrieb bereitzustellen, welche einfach aufgebaut und damit kostengünstig ist, aber welche die für das hochautomatisierte Fahren notwendige, möglichst hohe Verfügbarkeit bietet.

Diese Aufgabe wird erfindungsgemäß durch eine Bremsanlage gemäß Anspruch 1 sowie ein Verfahren gemäß Anspruch 12 gelöst.

Der Erfindung liegt der Gedanke zugrunde, eine Bremsanlage bereitzustellen mit hydraulisch betätigbaren Radbremsen, welche Rädern einer ersten Fahrzeugachse und Rädern einer zweiten Fahrzeugachse zugeordnet sind, einem elektrisch betätigbaren Einlassventil und elektrisch betätigbaren Auslassventil je Radbremse, einer ersten elektrisch steuerbaren Druckbereitstellungseinrichtung, die mit einer Bremsversorgungsleitung verbunden ist, an welche die Radbremsen angeschlossen sind, einer zweiten elektrisch steuerbaren Druckbereitstellungseinrichtung, die mit der Bremsversorgungsleitung verbunden ist, einer ersten elektrischen Einrichtung mit elektrischen und/oder elektronischen Elementen, welche die erste Druckbereitstellungseinrichtung ansteuert, und einer zweiten elektrischen Einrichtung mit elektrischen und/oder elektronischen Elementen, welche die zweite Druckbereitstellungseinrichtung ansteuert. Dabei sind in der Bremsanlage eine erste elektrische Partition und eine zweite elektrische Partition vorgesehen, wobei die erste und die zweite elektrische Partition elektrisch unabhängig voneinander sind. Die erste Druckbereitstellungseinrichtung und die erste elektrische Einrichtung sind der ersten elektrischen Partition zugeordnet bzw. gehören dieser an, und die zweite Druckbereitstellungseinrichtung, die zweite elektrische Einrichtung und die Einlass- und Auslassventile sind der zweiten elektrischen Partition zugeordnet bzw. gehören dieser an. Die Einlass- und Auslassventile werden von der zweiten elektrischen Einrichtung angesteuert. Die Bremsanlage umfasst zumindest ein elektrisch betätigbares Achstrennventil, das hydraulisch in der Bremsversorgungsleitung zwischen (einerseits) den Radbremsen für die Räder der ersten Fahrzeugachse und (andererseits) den Radbremsen für die Räder der zweiten Fahrzeugachse angeordnet ist, wobei das Achstrennventil der ersten elektrischen Partition angehört bzw. zugeordnet ist und von der ersten elektrischen Einrichtung angesteuert wird. So kann auch bei einem Ausfall in der zweiten elektrischen Partition, z.B. einem Ausfall der zweiten Druckbereitstellungseinrichtung oder der zweiten elektrischen Einrichtung, die Blockierreihenfolge der Achsen und die Lenkbarkeit aufrecht erhalten werden, da durch die erste elektrische Einrichtung mittels der ersten Druckbereitstellungseinrichtung und des Achstrennventils eine Bremsung mit achsindividuellen Radbremsdrücken durchgeführt werden kann. Das Achstrennventil ist stromlos offen ausgeführt, so dass zur Betätigung der / aller Radbremsen mittels einer der Druckbereitstellungseinrichtungen das Achstrennventil nicht angesteuert werden muss.

Somit sind auch die erste elektrische Einrichtung und die zweite elektrische Einrichtung elektrisch unabhängig voneinander.

Die Erfindung bietet den Vorteil, dass die Bremsanlage eine hohe Verfügbarkeit bzgl. der Bereitstellung von Bremsfunktionen besitzt, in denen alle Radbremsen, ggf. mit unterschiedlichen Radbremsdrücken, betätigt werden, um z.B. eine kurzen Bremsweg zu gewährleisten und die Lenkbarkeit des Kraftfahrzeugs aufrecht zu erhalten. So können in einem fehlerfreien Zustand der Bremsanlage radindividuelle Radbremsdrücke eingestellt werden, indem die erste elektrische Einrichtung mittels der ersten Druckbereitstellungseinrichtung einen (zentralen) Bremsdruck bereitstellt und die zweite elektrische Einrichtung mittels der Einlass- und Auslassventile die radindividuellen Radbremsdrücke moduliert. Aber auch bei einem Ausfall in der ersten elektrischen Partition, also z.B. einem Ausfall der ersten Druckbereitstellungseinrichtung oder der ersten elektrischen Einrichtung, können radindividuelle Radbremsdrücke eingestellt werden, indem die zweite elektrische Einrichtung mittels der zweiten Druckbereitstellungseinrichtung und der Einlass- und Auslassventile eine Bremsung mit radindividuellen Radbremsdrücken durchführt.

Bevorzugt werden die erste Druckbereitstellungseinrichtung ausschließlich von der ersten elektrischen Einrichtung sowie die zweite Druckbereitstellungseinrichtung und die Einlass- und Auslassventil ausschließlich von der zweiten elektrischen Einrichtung angesteuert. So kann auf weitere Redundanz in den Komponenten, z.B. auf doppelt ansteuerbare Ventile mit zwei unabhängigen Ventilspulen oder auf eine Druckbereitstellungseinrichtung mit zwei elektrisch unabhängigen Elektromotoren verzichtet werden.

Um auf ein doppelt ansteuerbares Ventil sowie weitere Ansteuerleitungen verzichten zu können, wird das Achstrennventil bevorzugt ausschließlich von der ersten elektrischen Einrichtung angesteuert.

Bevorzugt ist das Achstrennventil derart angeordnet, dass bei geschlossenem Achstrennventil die Bremsversorgungsleitung in einen ersten Leitungsabschnitt und einen zweiten Leitungsabschnitt hydraulisch getrennt wird, wobei der erste Leitungsabschnitt mit der zweiten Druckbereitstellungseinrichtung und den Einlassventilen der Radbremsen der Hinterachse des Kraftfahrzeugs verbunden ist und der zweite Leitungsabschnitt mit der ersten Druckbereitstellungseinrichtung und den Einlassventilen der Radbremsen der Vorderachse des Kraftfahrzeugs verbunden ist. So kann bei einem Ausfall in der zweiten elektrischen Partition durch die erste elektrische Einrichtung der Achsbremsdruck an der Hinterachse konstant gehalten und an der Vorderachse moduliert werden.

Gemäß einer Weiterbildung der erfindungsgemäßen Bremsanlage ist dem Achstrennventil ein zweites Achstrennventil hydraulisch parallel geschaltet, wobei das zweite Achstrennventil der zweiten elektrischen Partition angehört bzw. zugeordnet ist und von der zweiten elektrischen Einrichtung angesteuert wird. Zur Reduzierung von Kosten und Redundanz wird das zweite Achstrennventil besonders bevorzugt ausschließlich von der zweiten elektrischen Einrichtung angesteuert.

Bevorzugt werden die erste elektrische Einrichtung von einer ersten elektrischen Energiequelle und die zweite elektrische Einrichtung von einer zweiten elektrischen Energiequelle, welche von der ersten elektrischen Energiequelle unabhängig ist, versorgt. Die erste Energiequelle ist somit Teil der ersten elektrischen Partition, die zweite Energiequelle ist Teil der zweiten elektrischen Partition. Vorteilhafterweise versorgt die die erste elektrische Energiequelle die erste elektrische Partition bzw. alle übrigen elektrischen Komponenten der ersten elektrischen Partition mit elektrischer Energie, die zweite elektrische Energiequelle versorgt die zweite elektrische Partition bzw. alle übrigen elektrischen Komponenten der zweiten elektrischen Partition mit elektrischer Energie.

Bevorzugt ist für jede der Radbremsen ein erster Raddrehzahlsensor vorgesehen, wobei die ersten Raddrehzahlsensoren der zweiten elektrischen Partition angehören bzw. zugeordnet sind und mit der zweiten elektrischen Einrichtung verbunden sind und von dieser ausgewertet werden. So kann die zweite elektrische Einrichtung die radindividuellen Bremsdrücke situationsgerecht einstellen. Zur Reduzierung von Kosten und Redundanz (z.B. Verbindungsleitungen) sind die ersten Raddrehzahlsensoren besonders bevorzugt ausschließlich mit der zweiten elektrischen Einrichtung verbunden und werden von dieser ausgewertet.

Bevorzugt ist eine erste Fahrdynamik-Sensorik vorgesehen, welche der ersten elektrischen Partition angehört bzw.-zugeordnet ist und welche mit der ersten elektrischen Einrichtung verbunden ist und von dieser ausgewertet wird. So kann die erste elektrische Einrichtung die achsindividuellen Bremsdrücke situationsgerecht einstellen. Zur Reduzierung von Kosten und Redundanz (z.B. Verbindungsleitungen) ist die erste Fahrdynamik-Sensorik besonders bevorzugt ausschließlich mit der ersten elektrischen Einrichtung verbunden und wird von dieser ausgewertet.

Gemäß einer Weiterbildung der Erfindung ist für jede der Radbremsen ein zweiter Raddrehzahlsensor vorgesehen, wobei die zweiten Raddrehzahlsensoren der ersten elektrischen Partition angehört bzw. zugeordnet ist und, insbesondere ausschließlich, mit der ersten elektrischen Einrichtung verbunden sind und von dieser ausgewertet werden, um die Regelgüte der achsindividuellen Bremsdrück zu erhöhen. Zur Reduzierung von Kosten und Redundanz (z.B. Verbindungsleitungen) sind die zweiten Raddrehzahlsensoren besonders bevorzugt ausschließlich mit der ersten elektrischen Einrichtung verbunden und werden von dieser ausgewertet.

Um die Regelgüte der radindividuellen Bremsdrück zu erhöhen und fahrdynamische Regelfunktionen ausführen zu können (mittels der zweiten Partition), ist bevorzugt eine zweite Fahrdynamik-Sensorik vorgesehen, welche der zweiten elektrischen Partition angehört bzw. zugeordnet ist und mit der zweiten elektrischen Einrichtung verbunden ist und von dieser ausgewertet wird. Zur Reduzierung von Kosten und Redundanz (z.B. Verbindungsleitungen) ist die zweite Fahrdynamik-Sensorik besonders bevorzugt ausschließlich mit der zweiten elektrischen Einrichtung verbunden und wird von dieser ausgewertet.

Bevorzugt ist die erste Druckbereitstellungseinrichtung über ein erstes Trennventil mit der Bremsversorgungsleitung verbunden, wobei das erste Trennventil der ersten elektrischen Partition angehört bzw. zugeordnet ist und, vorteilhafterweise ausschließlich, von der ersten elektrischen Einrichtung angesteuert wird.

Die zweite Druckbereitstellungseinrichtung ist bevorzugt über ein zweites Trennventil mit der Bremsversorgungsleitung verbunden, wobei das zweite Trennventil der ersten elektrischen Partition angehört bzw. zugeordnet ist und, vorteilhafterweise ausschließlich, von der ersten elektrischen Einrichtung angesteuert wird. So kann die zweite Druckbereitstellungseinrichtung, z.B. bei einer Leckage im Bereich der zweiten Druckbereitstellungseinrichtung, hydraulisch abgetrennt werden.

Um unterschiedliche Arten von Druckbereitstellungseinrichtungen verwenden zu können, ist bevorzugt ein stromlos offenes, vorteilhafterweise analog regelbares, Überströmventil zur Einstellung oder Regelung des von der zweiten Druckbereitstellungseinrichtung bereitgestellten Druckes vorgesehen. Dieses ist der zweiten elektrischen Partition zugeordnet bzw. angehört dieser an, und wird von der zweiten elektrischen Einrichtung angesteuert. Vorteilhafterweise wird das Überströmventil ausschließlich von der zweiten elektrischen Einrichtung angesteuert.

Gemäß einer Weiterbildung der Erfindung wird die zweite Druckbereitstellungseinrichtung durch eine Kolbenpumpe, vorteilhafterweise eine Radial-Kolbenpumpe, mit einem Sauganschluss und einem Druckanschluss gebildet, wobei der Druckanschluss über das Überströmventil mit dem Sauganschluss hydraulisch verbunden ist. Das Überströmventil ist also der zweiten Druckbereitstellungseinrichtung parallel geschaltet.

Bevorzugt wird die erste Druckbereitstellungseinrichtung durch eine Zylinder-Kolben-Anordnung mit einem hydraulischen Druckraum gebildet, deren Kolben durch einen elektromechanischen Aktuator für einen Bremsdruckaufbau vor- und für einen Bremsdruckabbau zurückgefahren wird.

Bevorzugt umfasst die Bremsanlage einem Bremspedal und eine Simulationseinrichtung. Die Simulationseinrichtung vermittelt dem Fahrzeugführer ein angenehmes Bremspedalgefühl.

Bevorzugt umfasst die Bremsanlage einen unter Atmosphärendruck stehenden Druckmittelvorratsbehälter.

Bevorzugt umfasst die Bremsanlage zumindest vier hydraulisch betätigbare Radbremsen.

Bevorzugt umfasst die Bremsanlage pro Radbremse ein Einlassventil sowie ein Auslassventil zum Einstellen radindividueller Bremsdrücke, die aus dem Bremsversorgungsdruck in der Bremsversorgungsleitung abgeleitet werden, wobei im nicht angesteuerten Zustand die Einlassventile den Bremsversorgungsdruck zu den Radbremsen weiterleiten und die Auslassventile ein Abströmen von Druckmittel aus den Radbremsen sperren.

Besonders bevorzugt sind alle Auslassventile über eine gemeinsame hydraulische Verbindung mit dem unter Atmosphärendruck stehenden Druckmittelvorratsbehälter verbunden.

Die Erfindung betrifft auch ein Verfahren zum Betrieb einer erfindungsgemäßen Bremsanlage.

In einem fehlerfreien Zustand der Bremsanlage führt die erste elektrische Einrichtung mittels der ersten Druckbereitstellungseinrichtung eine Betätigung der Radbremsen durch, wobei die zweite elektrische Einrichtung mittels der Einlass- und Auslassventile radindividuelle Radbremsdrücke einstellt. Bevorzugt führt bei einem Ausfall in der ersten elektrischen Partition, z.B. einem Ausfall der ersten Druckbereitstellungseinrichtung oder der ersten elektrischen Energiequelle oder der ersten elektrischen Einrichtung, die zweite elektrische Einrichtung mittels der zweiten Druckbereitstellungseinrichtung sowie der Einlass- und Auslassventile eine Bremsung mit radindividuellen Radbremsdrücken durch.

Bei einem Ausfall in der zweiten elektrischen Partition, z.B. einem Ausfall der zweiten Druckbereitstellungseinrichtung oder der zweiten elektrischen Energiequelle oder der zweiten elektrischen Einrichtung, führt bevorzugt die erste elektrische Einrichtung mittels der ersten Druckbereitstellungseinrichtung und des Achstrennventils eine Bremsung mit achsindividuellen Radbremsdrücken durch.

Dabei wird zur Aufrechterhaltung der Lenkbarkeit und der Stabilität des Kraftfahrzeugs besonders bevorzugt der Achsbremsdruck an der Hinterachse konstant gehalten, während der Achsbremsdruck an der Vorderachse moduliert wird.

Die Erfindung bietet den Vorteil, dass die Bremsanlage auch bei Ausfall einer der beiden redundanten elektrischen Druckbereitstellungseinrichtungen, z.B. aufgrund eines Ausfalls der ihr zugeordneten elektrischen Energiequelle oder der ihr zugeordneten elektrischen Ansteuer-Einrichtung oder eines mechanischen Fehlers oder einer Leckage in der Druckbereitstellungseinrichtung selbst, die wichtigsten Rest-Bremsfunktionen aufrechterhalten kann, aber dabei die Anzahl von redundant ausgeführten Komponenten möglichst gering ist. So müssen weder die Sensoren noch die Raddruckregelventile (Einlass- und Auslassventile) redundant ausgebildet werden. Die erfindungsgemäße Bremsanlage ist daher besonders zur Realisierung von hochautomatsierten Fahrfunktionen geeignet.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer Bremsanlage,
- Fig. 2: ein zweites Ausführungsbeispiel einer Bremsanlage,
- Fig. 3: ein drittes Ausführungsbeispiel einer erfindungsgemäßen Bremsanlage, und
- Fig. 4: ein viertes Ausführungsbeispiel einer erfindungsgemäßen Bremsanlage.

Gleiche Teile sind in allen Figuren mit den gleichen Bezugszeichen versehen.

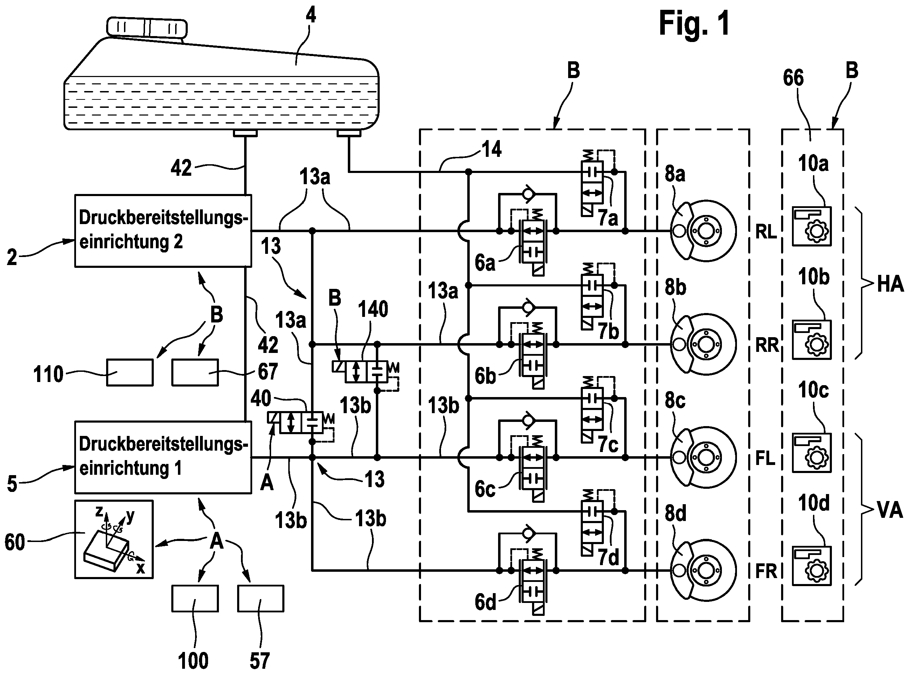

In Fig. 1 ist ein erstes Ausführungsbeispiel einer Bremsanlage für ein Kraftfahrzeug mit vier hydraulisch betätigbaren Radbremsen 8a-8d stark schematisch dargestellt. Beispielsgemäß ist die Radbremse 8a dem linken Hinterrad (RL), die Radbremse 8b dem rechten Hinterrad (RR), die Radbremse 8c dem linken Vorderrad (FL) und die Radbremse 8d dem rechten Vorderrad (FR) zugeordnet. Die Radbremsen 8a, 8b sind also der Hinterachse HA und die Radbremsen 8c, 8d der Vorderachse VA zugeordnet. Andere Zuordnungen der Radbremsen 8a-8d zu den Rädern (FL, FR, RL, RR) sind denkbar, jedoch ist eine "schwarz-weiß"-Aufteilung besonders vorteilhaft, wie unten noch ausgeführt werden wird.

Die Bremsanlage umfasst eine erste elektrisch steuerbare Druckbereitstellungseinrichtung 5, welche den primären Drucksteller bzw. die primäre Druckquelle der Bremsanlage darstellt, eine zweite elektrisch steuerbare Druckbereitstellungseinrichtung 2, welche den sekundären Drucksteller der Bremsanlage darstellt, einen unter Atmosphärendruck stehenden Druckmittelvorratsbehälter 4 und radindividuelle Bremsdruckmodulationsventile, welche als ein Einlassventil 6a-6d und ein Auslassventil 7a-7d je Radbremse ausgeführt sind.

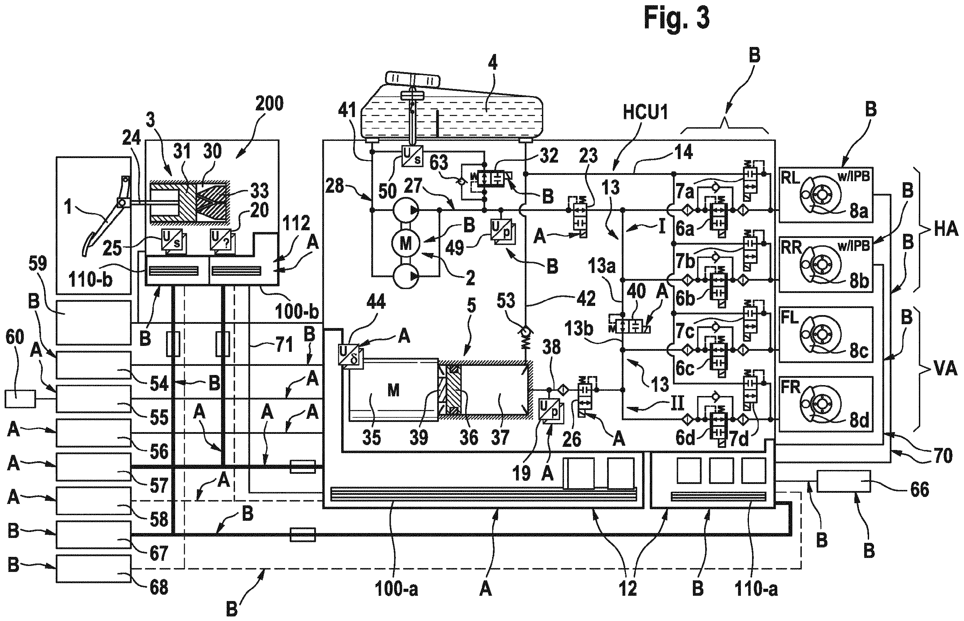

Die beiden Druckbereitstellungseinrichtungen 2 und 5 können identisch oder ähnlich aufgebaut sein, z.B. als zwei Linearaktuatoren wie die Druckbereitstellungseinrichtung 5 der Fig. 3. Alternativ können auch zwei verschiedene Arten von Druckbereitstellungseinrichtungen verwendet werden, wie z.B. in Fig. 3 ein Linearaktuator wie Druckbereitstellungseinrichtungen 5 und eine Radialkolbenpumpe wie Druckbereitstellungseinrichtungen 2.

Die erste elektrisch steuerbare Druckbereitstellungseinrichtung 5 ist an einen Leitungsabschnitt 13b einer Bremsversorgungsleitung 13 angeschlossen. Über die Bremsversorgungsleitung 13 sind alle Eingangsanschlüsse der Einlassventile 6a-6d miteinander verbunden. Entsprechend sind alle Eingangsanschlüsse der Einlassventile 6a-6d auch mit der ersten Druckbereitstellungseinrichtung 5 verbunden.

Die zweite elektrisch steuerbare Druckbereitstellungseinrichtung 2 ist mit einem Leitungsabschnitt 13a der Bremsversorgungsleitung 13 verbunden, so dass die Eingangsanschlüsse der Einlassventile 6a-6d auch mit der zweiten Druckbereitstellungseinrichtung 2 verbunden sind.

Beispielsgemäß ist in der Bremsversorgungsleitung 13, sozusagen zwischen den Leitungsabschnitten 13a und 13b, eine Parallelschaltung eines (ersten) elektrisch betätigbaren Achstrennventils 40 und eines weiteren (zweiten) elektrisch betätigbaren Achstrennventils 140 angeordnet. Die Parallelschaltung ist derart angeordnet, dass bei geschlossenen Achstrennventilen 40, 140 die Bremsversorgungsleitung 13 in den ersten Leitungsabschnitt 13a und den zweiten Leitungsabschnitt 13b hydraulisch getrennt wird, wobei der erste Leitungsabschnitt 13a mit der zweiten Druckbereitstellungseinrichtung 2 und den Einlassventilen 6a, 6b der Radbremsen 8a, 8b der Hinterachse HA des Kraftfahrzeugs verbunden ist und der zweite Leitungsabschnitt 13b mit der ersten Druckbereitstellungseinrichtung 5 und den Einlassventilen 6c, 6d der Radbremsen 8c, 8d der Vorderachse VA des Kraftfahrzeugs verbunden ist. Die beiden Achstrennventile 40, 140 sind stromlos geschlossen ausgeführt.

Alternativ (siehe auch Fig. 3) ist in der Bremsversorgungsleitung 13 ein (einziges) Achstrennventil 40 angeordnet, welches derart angeordnet ist, dass bei geschlossenem Achstrennventil 40 die Bremsversorgungsleitung 13 in den ersten Leitungsabschnitt 13a und den zweiten Leitungsabschnitt 13b hydraulisch getrennt wird, wobei der erste Leitungsabschnitt 13a mit der zweiten Druckbereitstellungseinrichtung 2 und den Einlassventilen 6a, 6b der Radbremsen 8a, 8b der Hinterachse HA des Kraftfahrzeugs verbunden ist und der zweite Leitungsabschnitt 13b mit der ersten Druckbereitstellungseinrichtung 5 und den Einlassventilen 6c, 6d der Radbremsen 8c, 8d der Vorderachse VA des Kraftfahrzeugs verbunden ist. Das Achstrennventil 40 ist erfindungsgemäß stromlos offen ausgeführt.

In beiden Fällen ist die Bremsversorgungsleitung 13 durch das oder die Achstrennventile in den ersten Leitungsabschnitt 13a, welcher die zweite Druckbereitstellungseinrichtung 2 mit den Radbremsen 8a, 8b der Hinterachse verbindet, und den zweiten Leitungsabschnitt 13b, welcher die erste Druckbereitstellungseinrichtung 5 mit den Radbremsen 8c, 8d der Vorderachse verbindet, trennbar. Bei geschlossenen Achstrennventilen 40, 140 bzw. geschlossenem Achstrennventil 40 ist die Bremsanlage in zwei hydraulische (Achs)Bremskreise I und II aufgetrennt oder aufgeteilt. Dabei ist im ersten Bremskreis I die Druckbereitstellungseinrichtung 2 mit nur noch den Radbremsen 8a und 8b der Hinterachse HA verbunden, und im zweiten Bremskreis II die erste Druckbereitstellungseinrichtung 5 mit nur noch den Radbremsen 8c und 8d der Vorderachse VA verbunden. Eine Anordnung derart, dass im erste Bremskreis I die Druckbereitstellungseinrichtung 2 mit nur den Radbremsen der Vorderachse VA verbunden und im zweiten Bremskreis II die erste Druckbereitstellungseinrichtung 5 mit nur den Radbremsen der Hinterachse HA verbunden ist, ist ebenso denkbar.

Vorteilhafterweise ist die mit den Vorderachs-Radbremsen 8c, 8d verbundene, erste Druckbereitstellungseinrichtung 5 ein high-Performance Drucksteller, der in der fehlerfreien Bremsanlage die Normalbremsfunktion mit höchstem Komfort und höchster Dynamik realisiert.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und an die Radbremse 8a-8d angeschlossen sind. Den Einlassventilen 6a-6d ist jeweils ein zu der Bremsversorgungsleitung 13 hin öffnendes, nicht näher bezeichnetes Rückschlagventil parallel geschaltet. Die Ausgangsanschlüsse der Auslassventile 7a-7d sind über eine gemeinsame Rücklaufleitung 14 mit dem Druckmittelvorratsbehälter 4 verbunden. Die Eingangsanschlüsse aller Einlassventile 6a-6d können mittels der Bremsversorgungsleitung 13 (also bei offenem Achstrennventil 40 oder 140) mit einem Druck versorgt werden, der von der ersten Druckbereitstellungseinrichtung 5 oder, z.B. bei Ausfall der ersten Druckbereitstellungseinrichtung 5, von der zweiten Druckbereitstellungseinrichtung 2 bereitgestellt wird.

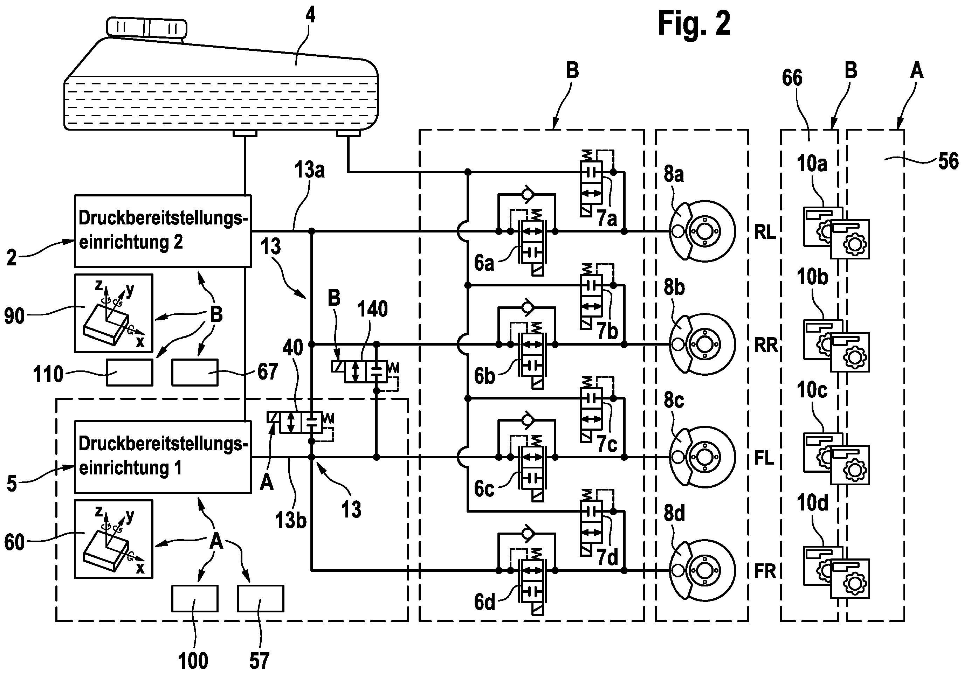

Die Druckbereitstellungseinrichtungen 2 und 5 sind mit dem Druckmittelvorratsbehälter 4 zum Nachsaugen oder Ansaugen von Druckmittel verbunden, was beispielsgemäß durch eine gemeinsame Nachsaugleitung 42 angedeutet ist. Ggf. notwendige oder sinnvolle schaltbare Ventile oder Rückschlagventile sind in Fig. 1 und 2 nicht im Detail dargestellt.

Jedem Rad RL, RR, FL, FR ist ein Raddrehzahlsensor 10a-10d zugeordnet. Die Raddrehzahlsensoren 10a-10d, welche als Gruppe mit dem Bezugszeichen 66 bezeichnet sind, werden für Bremsdruckregelfunktionen mit radindividuellen (Rad)Bremsdrücken, z.B. für Antiblockierregelfunktionen (ABS), benötigt.

Die Bremsanlage ist weiterhin beispielsgemäß mit einer Fahrdynamik-Sensorik 60 verbunden oder umfasst eine solche. Die Fahrdynamik-Sensorik 60 umfasst zumindest eine Messeinrichtung zur Erfassung einer oder mehrerer der folgenden Größen:
- Längsbeschleunigung, insbesondere Fahrzeuglängsbeschleunigung;
- Querschleunigung, insbesondere Fahrzeugquerbeschleunigung;
- Gierrate;
- Lenkwinkel.

Zur elektrischen Anbindung, Verbindung und Versorgung der einzelnen elektrischen bzw. elektrisch betätigbaren, ansteuerbaren, auswertbaren o.ä. Komponenten der Bremsanlage sind eine erste elektrische Partition A und eine zweite elektrische Partition B vorgesehen, welche elektrisch unabhängig voneinander sind.

In den Figuren sind diejenigen elektrischen Komponenten, welche der ersten elektrischen Partition A zugeordnet sind bzw. dieser angehören, durch einen Pfeil mit A gekennzeichnet, während diejenigen elektrischen Komponenten, welche der zweiten elektrischen Partition B zugeordnet sind bzw. dieser angehören, durch einen Pfeil mit B gekennzeichnet sind.

Die Bremsanlage umfasst eine erste elektrische Einrichtung 100 mit elektrischen und/oder elektronischen Elementen (z.B. Mikrocontrollern, Leistungsteilen, Ventiltreibern, sonstigen elektronischen Bauteilen, etc.), welche der ersten elektrischen Partition A zugeordnet ist bzw. angehört, und eine zweite elektrische Einrichtung 110 mit elektrischen und/oder elektronischen Elementen (z.B. Mikrocontrollern, Leistungsteilen, Ventiltreibern, sonstigen elektronischen Bauteilen, etc.), welche der zweiten elektrischen Partition B zugeordnet ist bzw. angehört. Daher sind auch die erste elektrische Einrichtung und die zweite elektrische Einrichtung elektrisch unabhängig voneinander.

Die erste elektrische Einrichtung 100 steuert die erste Druckbereitstellungseinrichtung 5 an. Entsprechend ist die erste Druckbereitstellungseinrichtung 5 der ersten elektrischen Partition A zugeordnet bzw. zugehörig.

Die zweite elektrische Einrichtung 110 steuert die zweite Druckbereitstellungseinrichtung 2 an. Entsprechend ist die zweite Druckbereitstellungseinrichtung 2 der zweiten elektrischen Partition B zugeordnet bzw. zugehörig.

Beispielsgemäß lässt sich bzw. wird die erste Druckbereitstellungseinrichtung 5 ausschließlich durch die erste elektrische Einrichtung 100 und die zweite Druckbereitstellungseinrichtung 2 ausschließlich durch die zweite elektrische Einrichtung 110 ansteuern bzw. angesteuert. Grundsätzlich wäre es denkbar den Elektromotor einer Druckbereitstellungseinrichung z.B. mit zwei elektrisch unabhängigen Motorwicklungen auszustatten, so könnte die Druckbereitstellungseinrichtung von den zwei unabhängigen elektrischen Einrichtungen angesteuert werden. Dies wäre jedoch mit weiteren Redundanzen, z.B. zweifachen Verbindungsleitungen etc., verbunden und daher kostenintensiver.

Übrige Komponenten der Bremsanlage sind in vorteilhafterweise entweder der ersten elektronische Vorrichtung A (welche die erste Druckbereitstellungseinrichtung 5 ansteuert bzw. betätigt) oder der zweiten elektronische Vorrichtung B (welche die zweite Druckbereitstellungseinrichtung 2 ansteuert bzw. betätigt) zugeordnet. D.h. sie werden durch diese Vorrichtung angesteuert bzw. betätigt und/oder mit elektrischer Energie versorgt und/oder sind Signalseitig mit dieser Vorrichtung verbunden und/oder werden durch diese Vorrichtung ausgewertet. Um weitere Redundanzen zu vermeiden, ist vorteilhafterweise eine Komponente lediglich bzw. ausschließlich von einer der beiden elektronischen Vorrichtungen 100, 110, nicht aber von der anderen elektronischen Vorrichtung, ansteuerbar bzw. betätigbar oder mit elektrischer Energie versorgbar oder signalseitig verbunden oder auswertbar.

Die Einlass- und Auslassventile 6a-6d, 7a-7d sind der zweiten elektrischen Partition B zugeordnet und werden von der zweiten elektrischen Einrichtung 110 angesteuert. Beispielsgemäß werden die Einlass- und Auslassventile 6a-6d, 7a-7d lediglich von der zweiten elektrischen Einrichtung 110 angesteuert. Grundsätzlich wäre es denkbar, ein Ventil doppelt ansteuerbar auszuführen, z.B. mit zwei elektrisch unabhängigen Betätigungsspulen. So könnte das Ventil von den zwei unabhängigen elektrischen Einrichtungen angesteuert werden. Dies wäre jedoch kostenintensiver. Daher besitzen die Radregelventile 6a-6d, 7a-7d (wie üblich) jeweils nur eine Ventilspule und werden lediglich von der zweiten elektrischen Einrichtung 110 angesteuert.

Ebenso sind die Raddrehzahlsensoren 10a-10d bzw. 66 der zweiten elektrischen Partition B zugeordnet. Ihre Signale werden der zweiten elektrischen Einrichtung 110 zugeleitet und von der zweiten elektrischen Einrichtung 110 verarbeitet. Aus Kostengründen sind die Raddrehzahlsensoren 10a-10d bzw. 66 ausschließlich mit der zweiten elektrischen Einrichtung 110 signalseitig verbunden ist und werden von der zweiten elektrischen Einrichtung 110 ausgewertet. Vorteilhafterweise werden die Raddrehzahlsensoren 66 mittels der zweiten elektrischen Einrichtung 110 mit elektrischer Energie versorgt.

Das Achstrennventil 40 ist hingegen der ersten elektrischen Partition A zugeordnet und wird von der ersten elektrischen Einrichtung 100 angesteuert.

Das zweite Achstrennventil 140 ist hingegen der zweiten elektrischen Partition B zugeordnet und wird von der zweiten elektrischen Einrichtung 110 angesteuert.

Aus Kostengründen wird das Achstrennventil 40 ausschließlich von der ersten elektrischen Einrichtung 100 angesteuert, das Achstrennventil 140 wird ausschließlich von der zweiten elektrischen Einrichtung 110 angesteuert.

Die Fahrdynamik-Sensorik 60 ist wie das erste Achstrennventil 40 der elektrischen Partition A zugeordnet. Die Signale werden der ersten elektrischen Einrichtung 100 zugeleitet und von der ersten elektrischen Einrichtung 100 ausgewertet und verarbeitet. Vorteilhafterweise ist auch die Fahrdynamik-Sensorik 60 lediglich mit der ersten elektrischen Einrichtung 100 signalseitig verbunden und wird von der ersten elektrischen Einrichtung 100 ausgewertet. Vorteilhafterweise wird die Fahrdynamik-Sensorik 60 mittels der ersten elektrischen Einrichtung 100 mit elektrischer Energie versorgt.

Die erste elektrische Einrichtung 100 wird von einer ersten elektrischen Energiequelle oder Energieversorgung 57, z.B. einem ersten Bordnetz, versorgt und die zweite elektrische Einrichtung 110 von einer zweiten elektrischen Energiequelle oder Energieversorgung 67, z.B. einem zweiten Bordnetz, versorgt. Dabei ist die zweite elektrische Energiequelle 67 von der ersten elektrischen Energiequelle 57 elektrisch unabhängig. Die erste Energiequelle 57 ist somit Teil der ersten elektrischen Partition A, die zweite Energiequelle 67 ist Teil der zweiten elektrischen Partition B.

Vorteilhafterweise versorgt die erste elektrische Energiequelle bzw. Energieversorgung 57 die erste elektrische Partition A, d.h. alle elektrischen Komponenten der ersten elektrischen Partition A, mit elektrischer Energie, während die zweite elektrische Energiequelle bzw. Energieversorgung 67 die zweite elektrische Partition B, d.h. alle elektrischen Komponenten der zweiten elektrischen Partition B, mit elektrischer Energie versorgt.

Beispielsgemäß und der Einfachheit wegen wird die erste Druckbereitstellungseinrichtung 5 über die erste elektrische Einrichtung 100 mit Energie (von der ersten elektrischen Energiequelle 57) und die zweite Druckbereitstellungseinrichtung 2 über die zweite elektrische Einrichtung 110 mit Energie (von der zweiten elektrischen Energiequelle 67) versorgt.

Unter einer elektrischen Einrichtung 100, 110 wird nicht unbedingt eine räumliche Einheit verstanden, welche z.B. in einem Gehäuse angeordnet ist. Die elektrischen und/oder elektronischen Elemente einer elektrischen Einrichtung können voneinander getrennt angeordnet sein, z.B. in verschiedenen elektronischen Steuer- und Regeleinheiten oder Gehäusen. Eine elektrische Einrichtung bildet zusammen mit den von ihr angesteuerten elektrischen oder elektrisch betätigbaren Komponenten sowie der die elektrische Einrichtung (und ggf. die zugehörigen Komponenten) mit elektrischer Energie versorgenden Energiequelle eine Partition. Diese ist eine elektrisch unabhängige Einheit.

Die elektrischen und/oder elektronischen Elemente der ersten elektrischen Einrichtung 100 und die der zweiten elektrischen Einrichtung 110 sind z.B. auf verschiedenen Leiterplatten angeordnet und werden von unabhängigen elektrischen Energiequellen 57 und 67 versorgt.

Fig. 2 zeigt ein zweites Ausführungsbeispiel einer Bremsanlage.

Im Unterschied zu dem ersten Ausführungsbeispiel der Fig. 1 ist je Rad ein zusätzlicher zweiter Raddrehzahlsensor vorgesehen. Die zweiten Raddrehzahlsensoren 56 sind der ersten elektrischen Partition A zugeordnet. Ihre Signale werden der ersten elektrischen Einrichtung 100 zugeleiten und von der ersten elektrischen Einrichtung 100 verarbeitet. Aus Kostengründen sind die Raddrehzahlsensoren 56 ausschließlich mit der ersten elektrischen Einrichtung 100 signalseitig verbunden und werden von der ersten elektrischen Einrichtung 100 ausgewertet. Vorteilhafterweise werden die Raddrehzahlsensoren 56 mittels der ersten elektrischen Einrichtung 100 mit elektrischer Energie versorgt. Mittels der zweiten Raddrehzahlsensoren 56 kann die Regelgüte der Partition A erhöht werden.

Weiterhin ist im Unterschied zum ersten Ausführungsbeispiel eine zweite Fahrdynamik-Sensorik 90 vorgesehen, welche der zweiten elektrischen Partition B zugeordnet ist. Ihre Signale werden der zweiten elektrischen Einrichtung 110 zugeleitet und von der zweiten elektrischen Einrichtung 110 ausgewertet und verarbeitet. Vorteilhafterweise ist auch die Fahrdynamik-Sensorik 90 lediglich mit der zweiten elektrischen Einrichtung 110 signalseitig verbunden und wird von der zweiten elektrischen Einrichtung 110 ausgewertet. Vorteilhafterweise wird die Fahrdynamik-Sensorik 90 mittels der zweiten elektrischen Einrichtung 110 mit elektrischer Energie versorgt. Mittels der zweiten Fahrdynamik-Sensorik 90 kann die Regelgüte der Partition B erhöht werden oder können, neben Antiblockierregelfunktionen, auch Fahrdynamik-Regelfunktionen durchgeführt werden.

Im Folgenden werden beispielsgemäße Verfahren zum Betrieb der beispielsgemäßen Bremsanlagen der Fig. 1 und 2 beschrieben:
a) Fehlerfreier Fall der Bremsanlage

Hier sind beide Partitionen A und B fehlerfrei und voll funktionsfähig, d.h. z.B. die beiden Druckbereitstellungseinrichtungen 2, 5 sowie die beiden elektrischen Einrichtungen 100, 110 und alle Ventile.

Ein angeforderter Bremsdruck wird mittels der ersten Druckbereitstellungseinrichtung 5 (Primärdrucksteller) bereitgestellt durch Ansteuerung mittels der ersten elektrischen Einrichtung 100. So sind Bremsungen mit allen Radbremsen 8a-8d möglich (4-Rad-Bremsen).

Radindividuelle Druckregelungen sind mittels der Einlass- und Auslassventile 6a-6d, 7a-7d möglich, welche von der zweiten elektrischen Einrichtung 110 angesteuert werden.

b) Ausfall in Partition A, z.B. Ausfall der ersten Druckbereitstellungseinrichtung 5, der ersten elektrischen Einrichtung 100 oder der ersten Energiequelle 57:
Da die zweite elektrische Einrichtung 110 die zweite Druckbereitstellungseinrichtung 2 sowie das Achstrennventil 140 ansteuert, kann durch Aktivieren der Druckbereitstellungseinrichtung 2 und Öffnen des Achstrennventils 140 die zweite Druckbereitstellungseinrichtung 2 mit allen Radbremsen 8a-8d verbunden werden und so Bremsdruck an allen Radbremsen aufgebaut und auch (gemeinsam) geregelt werden (4-Rad-Bremsen).

Auch radindividuelle Druckregelungen, insbesondere Antiblockierregelungen, sind mittels der Einlass- und Auslassventile 6a-6d, 7a-7d möglich, da diese von der zweiten elektrischen Einrichtung 110 angesteuert werden und der zweiten elektrischen Einrichtung 110 die Signale der Raddrehzahlsensoren 66 vorliegen.

So kann die zweite elektrische Partition B quasi unverändert wie bekannt ABS regeln (ABS: Antiblockiersystem) und zusammen mit der Möglichkeit, Bremsdruck aufzubauen, alle Rest-Funktionen realisieren.

c) Ausfall in Partition B, z.B. Ausfall der zweiten Druckbereitstellungseinrichtung 2, der zweiten elektrischen Einrichtung 110 oder der zweiten Energiequelle 67:
Da die erste elektrische Einrichtung 100 die erste Druckbereitstellungseinrichtung 5 sowie das Achstrennventil 40 ansteuert, kann durch Aktivieren der Druckbereitstellungseinrichtung 5 und Öffnen des Achstrennventils 40 die erste Druckbereitstellungseinrichtung 5 mit allen Radbremsen 8a-8d verbunden werde und so Bremsdruck an den Radbremsen 8a-8d aufgebaut und auch (gemeinsam) geregelt werden (4-Rad-Bremsen) .

Die Ansteuerbarkeit des Achstrennventils 40 ermöglicht es, dass achsweise unterschiedliche Drücke eingestellt werden können. Dies erfolgt z.B. nach einem Achs-Multiplex-Verfahren. Hierzu können auch die fahrdynamischen Daten der Sensorik 60 verwendet werden, welche der ersten elektrischen Einrichtung 100 zugeordnet ist. So kann die Blockierreihenfolge der Achsen eingehalten und ein ungewolltes Destabilisieren bei höheren Verzögerungen vermieden werden.

Die Leistungsfähigkeit dieser Regelstrategie (Fall c)) ist in Bezug auf Bremsleistung zwar nicht auf dem Niveau des fehlerfreien Systems . Es ist jedoch für den beschriebenen Fehlerfall ausreichend zur Sicherstellung der Rest-Funktion.

Fig. 3 zeigt schematisch ein drittes Ausführungsbeispiel einer erfindungsgemäßen Bremsanlage für ein Kraftfahrzeug mit vier hydraulisch betätigbaren Radbremsen 8a, 8b, 8c, 8d. Beispielsgemäß ist die Radbremse 8a dem linken Hinterrad (RL), die Radbremse 8b dem rechten Hinterrad (RR), die Radbremse 8c dem linken Vorderrad (FL) und die Radbremse 8d dem rechten Vorderrad (FR) zugeordnet. Die Radbremsen 8a, 8b sind also der Hinterachse HA und die Radbremsen 8c, 8d der Vorderachse VA zugeordnet.

Die Bremsanlage umfasst eine mittels eines Bremspedals 1 betätigbare Simulationseinrichtung 3, eine erste elektrisch steuerbare Druckbereitstellungseinrichtung 5, eine zweite elektrisch steuerbare Druckbereitstellungseinrichtung 2, einen unter Atmosphärendruck stehenden Druckmittelvorratsbehälter 4, radindividuelle Bremsdruckmodulationsventile, welche beispielsgemäß als ein Einlassventil 6a-6d und ein Auslassventil 7a-7d je Radbremse ausgeführt sind, eine erste elektronische Steuer- und Regeleinheit 12 und eine zweite elektronische Steuer- und Regeleinheit 112. Die elektronischen Steuer- und Regeleinheiten dienen z.B. zur Ansteuerung der elektrisch betätigbaren Komponenten der Bremsanlage, zur Energieversorgung von elektrischen Komponenten der Bremsanlage und/oder zur Auswertung von Signalen von Sensoren der Bremsanlage oder von Umgebungssensoren, was im Folgenden noch genauer erläutert wird.

Simulationseinrichtung 3 weist in einem Gehäuse einen Simulatorkolben 31 auf, welcher sich durch ein in einer Simulatorrückkammer 30 angeordnetes elastisches Element 33 (z.B. Simulatorfeder) am Gehäuse abstützt. Kolbenstange 24 koppelt die Schwenkbewegung des Bremspedals 1 infolge einer Pedalbetätigung mit der Translationsbewegung des Simulatorkolbens 31, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers. Zur Fahrerwunscherfassung ist ein weiterer Sensor 20 vorgesehen, der eine von dem Kolbenweg des Simulatorkolbens 31 unabhängige physikalische Größe, welche den Bremswunsch des Fahrzeugführers charakterisiert, erfasst. Dies kann z.B. ein Kraftsensor oder ein Drucksensor sein.

Die erste elektrisch steuerbare Druckbereitstellungseinrichtung 5 ist als eine hydraulische Zylinder-Kolben-Anordnung (bzw. ein einkreisiger elektrohydraulischer Aktuator (Linearaktuator)) ausgebildet, deren Kolben 36 von einem schematisch angedeuteten Elektromotor 35 unter Zwischenschaltung eines ebenfalls schematisch dargestellten Rotations-Translationsgetriebes 39 betätigbar ist, insbesondere vor- und zurückgefahren werden kann, um einen Druck in einem Druckraum 37 auf- und abzubauen. Der Kolben 36 begrenzt den Druckraum 37 der Druckbereitstellungseinrichtung 5. Zur Ansteuerung des Elektromotors ist ein die Rotorlage des Elektromotors 35 erfassender, lediglich schematisch angedeuteter Rotorlagensensor 44 vorgesehen.

An den Druckraum 37 der ersten elektrisch steuerbaren Druckbereitstellungseinrichtung 5 ist ein Systemdruckleitungsabschnitt 38 angeschlossen. Der Leitungsabschnitt 38 ist über ein elektrisch betätigbares, vorzugsweise stromlos geschlossenes, erstes Trennventil 26 mit einer Bremsversorgungsleitung 13 verbunden, über welche alle Eingangsanschlüsse der Einlassventile 6a-6d mit dem Druckraum 37 der ersten elektrisch steuerbaren Druckbereitstellungseinrichtung 5 verbunden sind. Durch das erste Trennventil 26 kann die hydraulische Verbindung zwischen dem Druckraum 37 der ersten elektrisch steuerbaren Druckbereitstellungseinrichtung 5 und der Bremsversorgungsleitung 13 (und damit den Eingangsanschlüssen der Einlassventile 6a-6d) gesteuert geöffnet und abgesperrt werden.

Druckraum 37 ist, unabhängig vom Betätigungszustand des Kolbens 36, über eine (Nachsaug)Leitung 42 mit dem Druckmittelvorratsbehälter 4 verbunden. In der Leitung 42 ist ein in Richtung des Druckmittelvorratsbehälters 4 schließendes Rückschlagventil 53 angeordnet. Ein Nachsaugen von Druckmittel in den Druckraum 37 ist so durch ein Zurückfahren des Kolbens 36 bei geschlossenem Trennventil 26 möglich. Die Zylinder-Kolben-Anordnung 5 weist keine Schnüffellöcher auf.

Die erste Druckbereitstellungseinrichtung 5 ist ein high-Performance Drucksteller, der in der fehlerfreien Bremsanlage die Normalbremsfunktion mit höchstem Komfort und höchster Dynamik realisiert.

Die zweite elektrisch steuerbare Druckbereitstellungseinrichtung 2 ist vorteilhafterweise als eine zweikreisige Radialkolbenpumpe ausgeführt, deren zwei Druckseiten zusammengeschaltet sind. Eine einkreisige Radialkolbenpumpe ist ebenfalls denkbar. Sie besitzt einen Sauganschluss 28, welcher über eine hydraulische Verbindung 41 mit dem Druckmittelvorratsbehälter 4 in Verbindung steht, und einen Druckanschluss 27. Der Druckanschluss 27 der zweiten Druckbereitstellungseinrichtung 2 ist mit der Bremsversorgungsleitung 13 verbunden, so dass die Eingangsanschlüsse der Einlassventile 6a-6d mit dem Druckanschluss 27 der zweiten Druckbereitstellungseinrichtung 2 verbunden sind.

Der zweiten Druckbereitstellungseinrichtung 2 ist zum einen ein Überströmventil 32 zugeordnet, dessen Ansteuerung eine Druckbegrenzung und Druckabbau realisieren kann. Hierzu ist der Druckanschluss 27 der zweiten Druckbereitstellungseinrichtung 2 über das Überströmventil 32 mit dem Sauganschluss 28 und damit dem Druckmittelvorratsbehälter 4 verbunden. Das Überströmventil 32 ist stromlos offen ausgeführt, und vorteilhafterweise analog regelbar ausgeführt. Mittels des Überströmventils 32 kann der von der zweiten Druckbereitstellungseinrichtung 2 für die Radbremsen bereitgestellte Druck begrenzt oder abgebaut werden.

Beispielsgemäß ist zwischen der zweiten Druckbereitstellungseinrichtung 2 und dem Druckmittelvorratsbehälter 4 eine Parallelschaltung des stromlos offenen, analog regelbaren Überströmventils 32 und einem zum Druckmittelvorratsbehälter 4 hin schließenden Rückschlagventil 63 angeordnet.

Der zweiten Druckbereitstellungseinrichtung bzw. Kolbenpumpe 2 ist außerdem ein (zweites) Trennventil 23 zugeordnet, welches hydraulisch in Reihe zu dem Überströmventil 32 angeordnet ist.

Das Trennventil 23 kann bei Bedarf geschlossen werden, um einen Druckabbau / Druckmittelabfluss über das Überströmventil 32 der zweiten Druckbereitstellungseinrichtungen 2 in den Druckmittelvorratsbehälter 4 zu vermeiden.

Gemäß dem Ausführungsbeispiel der Fig. 3 ist das Trennventil 23 hydraulisch in Reihe zu der zweiten Druckbereitstellungseinrichtung 2 angeordnet. Entsprechend ist die zweite Druckbereitstellungseinrichtung 2 über das (zweite) Trennventil 23 mit der Bremsversorgungsleitung 13 bzw. mit dem ersten Leitungsabschnitt 13a hydraulisch verbunden.

Gemäß einem nicht dargestellten, alternativen Ausführungsbeispiel ist das (zweite) Trennventil 23 hydraulisch parallel zu der zweiten Druckbereitstellungseinrichtung 2 angeordnet.

Die Bremsanlage umfasst, wie bereits erwähnt, je hydraulisch betätigbarer Radbremse 8a-8d ein Einlassventil 6a-6d und ein Auslassventil 7a-7d, die paarweise über Mittenanschlüsse hydraulisch zusammengeschaltet und an die Radbremse 8a-8d angeschlossen sind. Den Einlassventilen 6a-6d ist jeweils ein zu der Bremsversorgungsleitung 13 hin öffnendes, nicht näher bezeichnetes Rückschlagventil parallel geschaltet. Die Ausgangsanschlüsse der Auslassventile 7a-7d sind über eine gemeinsame Rücklaufleitung 14 mit dem Druckmittelvorratsbehälter 4 verbunden. Die Eingangsanschlüsse aller Einlassventile 6a-6d können mittels der Bremsversorgungsleitung 13 mit einem Druck versorgt werden, der von der ersten Druckbereitstellungseinrichtung 5 oder, z.B. bei Ausfall der ersten Druckbereitstellungseinrichtung, von der zweiten Druckbereitstellungseinrichtung 2 bereitgestellt wird.

In der Bremsversorgungsleitung 13 ist ein elektrisch betätigbares, stromlos offenes Achstrennventil 40 angeordnet, durch welches die Bremsversorgungsleitung 13 in einen ersten Leitungsabschnitt 13a, welcher (beispielsgemäß über das zweite Trennventil 23) mit der zweiten Druckbereitstellungseinrichtung 2 verbunden ist, und einen zweiten Leitungsabschnitt 13b, welcher (beispielsgemäß über das erste Trennventil 26) mit der ersten Druckbereitstellungseinrichtung 5 verbunden ist, getrennt werden kann. Dabei ist der erste Leitungsabschnitt 13a mit zwei der Einlassventile, nämlich den Einlassventilen 6a und 6b, hydraulisch verbunden und der zweite Leitungsabschnitt 13b ist mit den übrigen Einlassventilen, nämlich den Einlassventilen 6c und 6d, hydraulisch verbunden. Durch Schließen des Kreistrennventils 40 wird die Bremsanlage somit hydraulisch in zwei (Teil) Bremskreise I und II aufgetrennt oder aufgeteilt. Dabei ist im ersten Bremskreis I die zweite Druckbereitstellungseinrichtung 2 mit nur noch den Radbremsen 8a und 8b der Hinterachse verbunden, und im zweiten Bremskreis II die erste Druckbereitstellungseinrichtung 5 mit nur noch den Radbremsen 8c und 8d der Vorderachse verbunden.

Die Bremsanlage umfasst je Bremskreis I bzw. II einen Drucksensor: einen ersten Drucksensor 19, welcher der ersten Druckbereitstellungseinrichtung 5 zugeordnet ist, und einen zweiten Drucksensor 49, welcher der zweiten Druckbereitstellungseinrichtung 2 zugeordnet ist. Vorteilhafterweise sind die Drucksensoren nahe an der jeweiligen Druckbereitstellungseinrichtung angeschlossen, was für den Betrieb und die Eigendiagnose vorteilhaft ist.

Beispielsgemäß umfasst die Bremsanlage zur Leckageüberwachung eine Pegelmesseinrichtung 50 zur Bestimmung eines Druckmittel-Pegels in dem Druckmittelvorratsbehälter 4.

Beispielsgemäß umfasst die Bremsanlage an den Rädern der Hinterachse HA je eine elektrische Parkbremse (EPB). Diese kann in die hydraulischen Radbremsen integriert sein, sogenannte integrierte elektrische Parkbremse (IPB).

Jedem Rad ist beispielsgemäß ein erster Raddrehzahlsensor und ein unabhängiger zweiter Raddrehzahlsensor (oder ein redundanter Raddrehzahlsensor) zugeordnet (nicht im Einzelnen in Fig. 3 dargestellt), dessen Signale für Bremsregelfunktionen mit radindividuellen Bremsdrücken, z.B. für Antiblockierregelfunktionen (ABS), benötigt werden. Die ersten Raddrehzahlsensoren sind schematisch als Block 56 dargestellt und die zweiten Raddrehzahlsensoren als Block 66.

Die Bremsanlage ist weiterhin mit einer Fahrdynamik-Sensorik 60 verbunden oder umfasst eine solche.

Beispielsgemäß sind die Komponenten 2, 5, 6a-6d, 7a-7d, 32, 23, 40 und 26 in einem ersten Modul, z.B. in einer ersten hydraulischen Steuer- und Regeleinheit HCU1, angeordnet, während die Simulationseinrichtung 3 mit den Sensoren 25, 20 in einem getrennten, zweiten Modul 200 ausgeführt ist.

Der hydraulischen Steuer- und Regeleinheit HCU1 ist die erste elektronische Steuer- und Regeleinheit (ECU) 12 zugeordnet, welche stark schematisch dargestellt ist. Erstes Modul (HCU) und erste ECU 12 sind vorteilhafterweise in bekannterweise als eine erste elektrohydraulische Einheit (HECU) ausgeführt.

Dem Modul 200 der Simulationseinrichtung 3 ist eine eigene, die zweite elektronische Steuer- und Regeleinheit (ECU) 112 zugeordnet. Diese bilden bevorzugt eine zweite Einheit.

Alternativ ist auch eine Anordnung der Komponenten 2, 3, 5, 6a-6d, 7a-7d, 32, 23, 40 und 26 in einem gemeinsamen Modul, d.h. in einer gemeinsamen hydraulischen Steuer- und Regeleinheit (HCU) denkbar. Es können dann eine elektronische Steuer- und Regeleinheit (ECU) oder mehrere elektronische Steuer- und Regeleinheiten (ECU) zugeordnet sein.

Zur Versorgung der Bremsanlage mit elektrischer Energie sind eine erste elektrische Energiequelle 57, z.B. ein Bordnetz, und eine von der ersten Energiequelle unabhängige, zweite elektrische Energiequelle 67, z.B. ein Bordnetz, vorgesehen. Die erste elektrische Energiequelle 57 versorgt die elektrische Partition A mit Energie und die zweite elektrische Energiequelle 67 die elektrische Partition B.

Zur Ansteuerung der Bremsanlage sind eine erste elektrische Einrichtung 100 mit elektrischen und/oder elektronischen Elementen (z.B. Mikrocontrollern, Leistungsteilen, Ventiltreibern, sonstigen elektronischen Bauteilen, etc.), welche der ersten elektrischen Partition A zugeordnet ist bzw. angehört, und eine zweite elektrische Einrichtung 110 mit elektrischen und/oder elektronischen Elementen (z.B. Mikrocontrollern, Leistungsteilen, Ventiltreibern, sonstigen elektronischen Bauteilen, etc.), welche der zweiten elektrischen Partition B zugeordnet ist bzw. angehört. Die erste elektrische Einrichtung 100 und die zweite elektrische Einrichtung 110 bzw. die elektrische erste Partition A und die zweite elektrische Partition B sind elektrisch unabhängig.

Die elektrischen und/oder elektronischen Elemente einer der elektrischen Einrichtungen 100 oder 110 sind beispielsgemäß auf die beiden elektronischen Steuer- und Regeleinheiten 12, 112 verteilt. So umfasst jede der elektronischen Steuer- und Regeleinheiten 12, 112 zwei unabhängige (elektrisch getrennte) Leiterplatten, wobei auf der einen Leiterplatte nur Elemente der ersten elektrischen Einrichtung 100 und auf der anderen Leiterplatte nur Elemente der ersten elektrischen Einrichtung 110 angeordnet sind.

Die ECU 12 umfasst einen Teil 100-a der ersten elektrischen Einrichtung 100 (Partition A) und einen Teil 110-a der zweiten elektrischen Einrichtung 110 (Partition B).

Der Teil 100-a der elektrischen Einrichtung 100 wird von der ersten elektrischen Energiequelle 57 versorgt. Der Teil 110-a der Elektronik 110 wird von einer zweiten elektrischen Energiequelle 67 versorgt.

Der Teil 100-a der ersten elektrischen Einrichtung 100 umfasst z.B. die elektrischen und elektronischen Bauelemente sowie Ventilspulen zur Ansteuerung der Ventile 23, 26 und 40 (Partition A). Er umfasst weiter die elektrischen und elektronischen Bauelemente zur Ansteuerung des Elektromotors 35 der ersten Druckbereitstellungseinrichtung 5 (Partition A). Hierfür umfasst der Teil 100-a der ersten elektrischen Einrichtung 100 in ECU 12 auch die elektrischen und elektronischen Bauelemente zur Signalbearbeitung oder Auswertung des Sensors 44 des Elektromotors 35 der ersten Druckbereitstellungseinrichtung 5 (Partition A).

Bevorzugt sind die Ventile 23, 26 und 40 mit einer einzigen Ansteuerspule ausgestattet, so dass die Ventile 23, 26 und 40 lediglich von der ersten elektrischen Einrichtung 100 ansteuerbar sind (Partition A).

Der Teil 100-a der ersten elektrischen Einrichtung 100 in ECU 12 umfasst weiter die elektrischen und elektronischen Bauelemente zur Signalbearbeitung oder Auswertung des Drucksensors 19 für die erste Druckbereitstellungseinrichtung 5.

Der ersten elektrischen Einrichtung 100 bzw. dem Teil 100-a der ersten elektrischen Einrichtung 100 in ECU 12 werden die Signale der (ersten) Raddrehzahlsensoren 56 zugeführt.

Der ersten elektrischen Einrichtung 100 bzw. dem Teil 100-a der ersten elektrischen Einrichtung 100 in ECU 12 wird das Signal einer Mensch-Maschine-Schnittstelle (HMI) 55, z.B. einem Schalter, zum Aktivieren oder Deaktivieren einer Fahrdynamikregelfunktion (ESC) o.ä. zugeführt. Abhängig hiervon werden in dem Teil 100-a der elektrischen Einrichtung 100 die Signale der Fahrdynamik-Sensorik 60 ausgewertet und zur Druckstellung berücksichtigt.

Der Teil 110-a der zweiten elektrischen Einrichtung 110 in ECU 12 umfasst die elektrischen und elektronischen Bauelemente zur Ansteuerung des Elektromotors der zweiten Druckbereitstellungseinrichtung 2. Er umfasst weiter die elektrischen und elektronischen Bauelemente sowie Ventilspulen zur Ansteuerung des Ventils 32 und der Raddruckregelventile 6a-6d und 7a-7d. Bevorzugt werden übliche Ventile mit einer einzigen Ansteuerspule verwendet, so dass die Ventile 6a-6d und 7a-7d (und 32) lediglich von der zweiten elektrischen Einrichtung 110 ansteuerbar sind (Partition B).

Der Teil 110-a der zweiten elektrischen Einrichtung 110 in ECU 12 umfasst weiter die elektrischen und elektronischen Bauelemente zur Signalbearbeitung oder Auswertung des Drucksensors 49 für die zweite Druckbereitstellungseinrichtung 2.

Der Teil 110-a der zweiten elektrischen Einrichtung 110 in ECU 12 umfasst weiter elektrische und elektronische Bauelemente zur Ansteuerung der elektrischen Parkbremsen (IPB) der Hinterachse HA. In Fig. 3 sind entsprechende Ansteuerleitungen 70 angedeutet.

Dem Teil 110-a der zweiten elektrischen Einrichtung 110 bzw. der zweiten elektrischen Einrichtung 110 wird beispielsgemäß das Signal einer Mensch-Maschine-Schnittstelle 54 (HMI), z.B. eines Schalters, zur Betätigung der elektrischen Parkbremse (IPB, EPB), welche an den Rädern der Hinterachse HA angeordnet ist, zugeführt.

Der zweiten elektrischen Einrichtung 110 bzw. dem Teil 110-a werden beispielsgemäß die Signale der (z.B. vier) zweiten Raddrehzahlsensoren 66 bereitgestellt.

Der Teil 110-a der zweiten elektrischen Einrichtung 110 in ECU 12 ist mit einem Datenbus 68, z.B. einem CAN-Bus, verbunden.

Der Teil 100-a der ersten elektrischen Einrichtung 100 in ECU 12 ist mit einem Datenbus 58, z.B. einem CAN-Bus, verbunden.

Der erste und der zweite Datenbus 58, 68 sind vorteilhafterweise unabhängig voneinander.

Wie bereits erwähnt, gehört ein Teil 100-b der Elektronik in ECU 112 zu der ersten elektrischen Einrichtung 100, ein anderer Teil 110-b der Elektronik in ECU 112 gehört zu der zweiten elektrischen Einrichtung 110. Entsprechend wird der Teil 100-b der ersten elektrischen Einrichtung 100 in ECU 112 (Partition A) von der ersten elektrischen Energiequelle 57 versorgt und der Teil 110-b der zweiten elektrischen Einrichtung 110 in ECU 112 (Partition B) von der zweiten elektrischen Energiequelle 67.

Ebenso ist der Teil 100-b der ersten elektrischen Einrichtung 100 in ECU 112 mit dem Datenbus 58 verbunden, während der Teil 110-b der zweiten elektrischen Einrichtung 110 in ECU 112 mit dem Datenbus 68 verbunden ist.

Der Teil 100-b der ersten elektrischen Einrichtung 100 umfasst die elektrischen und elektronischen Bauelemente zur Signalaufbereitung oder Auswertung des Kraft- oder Drucksensors 20. Der Teil 110-b der zweiten elektrischen Einrichtung 110 umfasst die elektrischen und elektronischen Bauelemente zur Signalaufbereitung oder Auswertung des Wegsensors 25.

Der Teil 100-b der ersten elektrischen Einrichtung 100 in ECU 112 ist beispielsgemäß zur Übertragung der Signale von Sensor 20 direkt über eine Signalverbindungsleitung oder Kommunikationsverbindungsleitung 71 mit dem Teil 100-a der ersten elektrischen Einrichtung 100 in ECU 12 verbunden (71).

Der ersten elektrischen Partition A bzw. Einrichtung 100 sind also die erste Druckbereitstellungseinrichtung 5 und das Achstrennventil 40 zugeordnet. Weiterhin sind der ersten Partition bzw. elektrischen Einrichtung beispielsgemäß das Trennventil 26 und das Trennventil 23 zugeordnet.

Der ersten elektrischen Einrichtung 100 ist außerdem vorteilhafterweise einer der Sensoren 20, 25 zur Bremswunscherfassung zugeordnet, beispielsgemäß der Sensor 20.

Die Teile 100-a, 100-b der ersten elektrischen Einrichtung 110 sind beispielsgemäß über den Datenbus 58 miteinander verbunden, da sie räumlich in verschiedenen ECUs angeordnet sind.

Der zweiten elektrischen Partition B bzw. Einrichtung 110 sind also die zweiten Druckbereitstellungseinrichtung 2 und die Einlass- und Auslassventile 6a-6d, 7a-7d zugeordnet. Weiterhin ist der zweiten Partition bzw. Einrichtung beispielsgemäß das Überströmventil 32 zugeordnet.

Der zweiten elektrischen Einrichtung 110 ist außerdem vorteilhafterweise der andere Sensor (beispielsgemäß der Sensor 25) der Sensoren 20, 25 zur Bremswunscherfassung zugeordnet.

Die Teile 110-a, 110-b der zweiten elektrischen Einrichtung 110 sind beispielsgemäß über den Datenbus 68 miteinander verbunden, da sie räumlich in verschiedenen ECUs angeordnet sind.

Das zweite Trennventil 23 der zweiten Druckbereitstellungseinrichtung 2 (Partition B) wird von der ersten elektrischen Einrichtung 100 (Partition A) angesteuert. Bei Ausfall der sekundären Energieversorgung 67 oder der zweiten elektrischen Einrichtung 110 kann so das stromlos offene Ventil 23 geschlossen werden, um einen Druckabbau über das Überströmventil 32 der Sekundärdruckquelle zu vermeiden.

Über die beiden beschriebenen stromlos offenen Ventile 32, 23 ist die Druckentlastung des Systems in der Lösestellung gewährleistet. Insbesondere kann als Primärdruckquelle 5 ein konventioneller Linearaktuator ohne Schnüffelloch verwendet werden, und das erste Trennventil 26 zwischen Linearaktuator 5 und Bremsversorgungsleitung 13 kann ein konventionelles stromlos geschlossenes Ventil sein.

Um bei Ausfall der zweiten Energieversorgung 67 oder der zweiten elektrischen Einrichtung 110 (Ausfall in Partition B) Druck auf- und abbauen zu können, wird das Trennventil 26 von der ersten elektrischen Einrichtung 100 angesteuert (Partition A). Bei Ausfall der ersten Energieversorgung 57 oder der ersten elektrischen Einrichtung 100 ist dagegen die stromlos geschlossene Stellung des Trennventils 26 die vorteilhaftere.

Die beiden Einheiten aus je hydraulischer bzw. mechanischer Einheit HCU1 bzw. 200 und elektronischer Steuer- und Regeleinheit 12 bzw. 112 sind bevorzugt an der Spritzwand oder dem Fahrwerk angebracht, was durch den Block 59 in Fig. 3 schematisch angedeutet ist.

Im Folgenden werden beispielsgemäße Verfahren zum Betrieb der Bremsanlage beschrieben:
a) Ausfall in Partition A, z.B. Ausfall der ersten Druckbereitstellungseinrichtung 5, der ersten elektrischen Einrichtung 100 oder der ersten Energiequelle 57:
   Da die zweite elektrische Einrichtung 110 die zweite Druckbereitstellungseinrichtung 2 und das Überströmventil 32 ansteuert, kann Bremsdruck an allen Radbremsen aufgebaut und auch (gemeinsam) geregelt werden (4-Rad-Bremsen).

Auch radindividuelle Druckregelungen, insbesondere Antiblockierregelungen, sind mittels der Einlass- und Auslassventile 6a-6d, 7a-7d möglich, da diese von der zweiten elektrischen Einrichtung 110 angesteuert werden und der zweiten elektrischen Einrichtung 110 die Signale der Raddrehzahlsensoren 66 vorliegen.

So kann die zweite elektrische Partition B quasi unverändert wie bekannt ABS regeln (ABS: Antiblockiersystem) und zusammen mit der Möglichkeit, Bremsdruck aufzubauen, alle Rest-Funktionen realisieren.

b) Ausfall in Partition B, z.B. Ausfall der zweiten Druckbereitstellungseinrichtung 2, der zweiten elektrischen Einrichtung 110 oder der zweiten Energiequelle 67:
Da die erste elektrische Einrichtung 100 die erste Druckbereitstellungseinrichtung 5, das Achstrennventil 40 sowie das erste und das zweite Trennventil 26, 23 ansteuert, kann durch Aktivieren der Druckbereitstellungseinrichtung 5, Öffnen des Trennventils 26 und Schließen des Trennventils 23 die erste Druckbereitstellungseinrichtung 5 mit allen Radbremsen 8a-8d verbunden werde und so Bremsdruck an den Radbremsen 8a-8d aufgebaut und auch (gemeinsam) geregelt werden (4-Rad-Bremsen) .

Die Ansteuerbarkeit des Achstrennventils 40 ermöglicht es, dass achsweise unterschiedliche Drücke eingestellt werden können. Dies erfolgt z.B. nach einem Achs-Multiplex-Verfahren. Hierzu werden die fahrdynamischen Daten der Sensorik 60 verwendet, welche der ersten elektrischen Einrichtung 100 zugeordnet ist. So kann die Blockierreihenfolge der Achsen eingehalten und ein ungewolltes Destabilisieren bei höheren Verzögerungen vermieden werden.

Die Leistungsfähigkeit dieser Regelstrategie (Fall b)) ist in Bezug auf Bremsleistung zwar nicht auf dem Niveau des fehlerfreien Systems . Es ist jedoch für den beschriebenen Fehlerfall ausreichend zur Sicherstellung der Rest-Funktion.

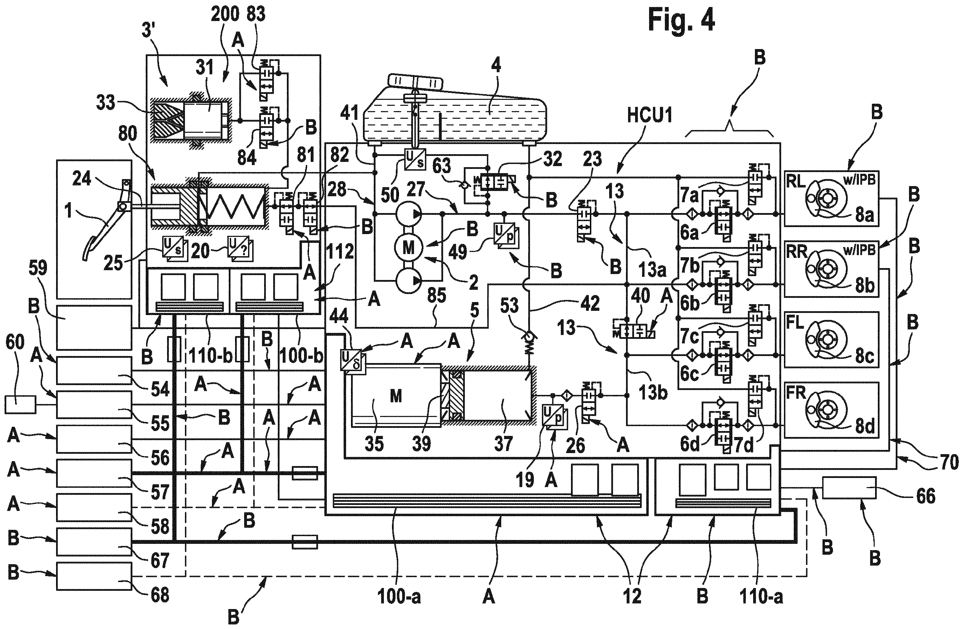

Fig. 4 zeigt ein viertes Ausführungsbeispiel einer erfindungsgemäßen Bremsanlage. Das vierte Ausführungsbeispiel entspricht weitgehend dem dritten Ausführungsbeispiel der Fig. 3. Im Folgenden werden daher die Unterschiede beschrieben.

Das zweite Trennventil 23 der zweiten Druckbereitstellungseinrichtung 2 ist stromlos geschlossen ausgeführt. Es gehört der zweiten elektrischen Partition B an und wird (wie das Überströmventil 32), insbesondere ausschließlich, von der zweiten elektrischen Einrichtung 110 angesteuert bzw. mit Energie versorgt.

Das vierte Ausführungsbeispiel unterscheidet sich von dem dritten Ausführungsbeispiel der Fig. 3 weiterhin dadurch, dass anstelle der bremspedalbetätigten Simulationseinrichtung 3 ein bremspedalbetätigter, einkreisiger Hauptbremszylinder 80 und eine mit dem Hauptbremszylinder 80 verbundene hydraulische Simulationseinrichtung 3' vorgesehen sind. Der Hauptbremszylinder 80 ist über eine Leitung 85 mit der Bremsversorgungsleitung 13, vorteilhafterweise dem ersten Leitungsabschnitt 13a, verbunden.

Zwischen Hauptbremszylinder 80 und Bremsversorgungsleitung 13 sind ein drittes Trennventil 81 und ein dem dritten Trennventil nachgeschaltetes, viertes Trennventil 82 angeordnet. Die Ventile 81, 82 sind in Reihe geschaltet. Drittes und viertes Trennventil 81, 82 sind stromlos offen ausgeführt.

Trennventil 81 gehört beispielsgemäß der ersten Partition A an und wird von der ersten elektrischen Einrichtung 100, insbesondere dem Teil 100-b in ECU 112, angesteuert, während Trennventil 82 der zweiten Partition B angehört und von der zweiten elektrischen Einrichtung 110, insbesondere dem Teil 110-b in ECU 112, angesteuert wird. Eine umgekehrte Zuordnung / Ansteuerung ist ebenfalls möglich.

Zwischen Hauptbremszylinder 80 und Simulationseinrichtung 3' sind ein erstes Simulatorfreigabeventil 83 und ein zweites Simulatorfreigabeventil 84 angeordnet. Die Ventile 83, 84 sind parallel geschaltet. Die Ventile 83, 84 sind stromlos geschlossen ausgeführt.

Simulatorfreigabeventil 83 gehört beispielsgemäß der ersten Partition A an und wird von der ersten elektrischen Einrichtung 100, insbesondere dem Teil 100-b in ECU 112, angesteuert, während Simulatorfreigabeventil 83 der zweiten Partition B angehört und von der zweiten elektrischen Einrichtung 110, insbesondere dem Teil 110-b in ECU 112, angesteuert wird. Eine umgekehrte Zuordnung / Ansteuerung ist ebenfalls möglich.

Entsprechend umfasst der Teil 100-b der ersten elektrischen Einrichtung 100 in ECU 112 die elektrischen und elektronischen Bauelemente sowie Ventilspulen zur Ansteuerung der Ventile 81 und 83. Der Teil 110-b der zweiten elektrischen Einrichtung 110 in ECU 112 umfasst die elektrischen und elektronischen Bauelemente sowie Ventilspulen zur Ansteuerung der Ventile 82 und 84.

Die Bremsanlage gemäß dem vierten Ausführungsbeispiel umfasst somit einen zusätzlichen hydraulischen Durchgriff (durch den Fahrer) als zweite Rückfallebene für den Fall eines doppelten Fehlers, z.B. eines Ausfalls von erster und zweiter Druckbereitstellungseinrichtung 2, 5.

In allen Ausführungsbeispielen sind die erste elektrische Partition A (d.h. die erste elektrische Einrichtung 100, die erste Energieversorgung 57 und die mit ihr verbundenen Komponenten bzw. die von ihr angesteuerten Komponenten) und die zweite elektrische Partition B (zweite elektrische Einrichtung 110, zweite Energieversorgung 67 und die mit ihr verbundenen Komponenten bzw. die von ihr angesteuerten Komponenten) elektrisch unabhängig.

Eine besondere Eigenschaft der beispielsgemäßen Bremsanlagen der Fig. 1 bis 4 ist die Asymmetrie, wobei
- eine elektrische Partition B mittels acht Raddruckmodulatorventilen (Einlassventile 6a-6d und Auslassventile 7a-7d) und einer Druckbereitstellungseinrichtung 2 4-Rad-Bremsungen sowie radindividuelle Druckregelungen auch nach einem Ausfall in der anderen elektrischen Partition A, z.B. der ersten elektrischen Einrichtung 100 oder deren elektrische Energiequelle 57, durchführen kann, und
- eine andere, unabhängige elektrische Partition A mittels einer anderen Druckbereitstellungseinrichtung 5 und zumindest eines Achstrennventils 40 (und ggf. weiterer Ventile) 4-Rad-Bremsungen sowie achsindividuelle Druckregelungen auch nach einem Ausfall in der Partition B, z.B. der zweiten elektrischen Einrichtung 110 oder deren elektrische Energiequelle 67, durchführen kann.

Die beispielsgemäßen Bremsanlagen umfassen eine primäre (5) und eine sekundäre (2) Druckbereitstellungseinrichtung, eine einzige Raddruckmodulationsgruppe 6a-6d, 7a-7d und zumindest ein Achstrennventil 40.

Die beispielsgemäßen Bremsanlagen bieten die zur Realisierung von hochautomatisierten Fahrfunktionen notwendige Redundanz, um autonome Bremsanforderungen umzusetzen. Auch nach einem schwerwiegenden Fehler, wie beispielsweise einem Ausfall der ersten Energieversorgung 57 der Partition A bzw. der ersten Druckbereitstellungseinrichtung 5, ist die Bremsanlage in der Lage, gewisse Rest-Bremsfunktionen weiterhin autonom bzw. durch einen Autopiloten gesteuert zu realisieren. Die wichtigsten Rest-Bremsfunktionen der Bremsanlage sind:
- Verzögerung aufbauen;
- Blockierreihenfolge der Achsen einhalten und ein ungewolltes Destabilisieren bei höheren Verzögerungen vermeiden;
- Lenkbarkeit aufrechterhalten, um dem (Auto-)Pilot auch gebremste Ausweichmanöver zu ermöglichen.

Eine kostenintensive Lösung zur Bereitstellung einer Bremssystem-Architektur, die auch nach schwerwiegenden Fehlern an Teilen des Systems oder des Fahrzeugs die Rest-Funktionen noch in ausreichender Ausprägung realisieren kann, wäre es, eine weitestgehend symmetrische Redundanz in den Bremsanlagenkomponenten bereitzustellen, bei der die zur Realisierung der Rest-Funktion notwendigen Komponenten sämtlich redundant (d.h. doppelt) vorhanden sind. Darüber hinaus übernehmen die redundanten Teile dabei oftmals im fehlerfreien Zustand keine besondere Funktion, müssen jedoch überwacht werden und stellen zusätzliche Bauteile dar, die ihrer selbst zu Ausfällen führen, was die Verfügbarkeit des fehlerfreien Zustands grundsätzlich reduziert.

Die Erfindung bietet den Vorteil, dass die Anzahl der redundanten Komponenten möglichst klein gehalten wird. Weder die Einlass- und Auslassventile zur radindividuellen Bremsdruckregelung noch die Sensoren für radindividuelle Bremsdruckregelfunktionen (wie Antiblockierregelung, Fahrdynamikregelung etc.) werden redundant ausgebildet.

Die im System verwendeten Raddruck-Regelungs-Aktuatoren (z.B. Ventilspulen der Einlass- und Auslassventile) und Sensoren werden mit den beiden redundanten Druckbereitstellungseinrichtungen 2, 5 vorteilhaft partitioniert, indem die nicht redundanten Komponenten auf die beiden redundanten Druckbereitstellungseinrichtungen 2, 5 derart verteilt werden, dass bei Ausfall einer redundanten Druckbereitstellungseinrichtung die verbleibende Druckbereitstellungseinrichtung mit Hilfe der ihr zugeordneten Komponenten weiterhin die Primärfunktionen gewährleisten kann. Dabei bezieht sich der Ausfall einer Druckbereitstellungseinrichtungen auf die verschiedenen Fehlermöglichkeiten wie z.B. Ausfall einer redundanten elektrischen Versorgung, einer redundanten Recheneinheit oder eines redundanten hydraulischen Druckbereitstellers.

Dabei wird vorteilhafterweise die Regelstrategie an die jeweils verbleibenden Aktuatoren und Sensoren angepasst.

## Patentansprüche

1. Bremsanlage für ein Kraftfahrzeug mit
• hydraulisch betätigbaren Radbremsen (8a-8d), welche Rädern (FL, FR) einer ersten Fahrzeugachse (VA) und Rädern (RL, RR) einer zweiten Fahrzeugachse (HA) zugeordnet sind,
• einem elektrisch betätigbaren Einlassventil (6a-6d) und elektrisch betätigbaren Auslassventil (7a-7d) je Radbremse (8a-8d) zum Einstellen radindividueller Bremsdrücke,
• einer ersten elektrisch steuerbaren Druckbereitstellungseinrichtung (5), die mit einer Bremsversorgungsleitung (13) verbunden ist, an welche die Radbremsen (8a-8d) angeschlossen sind,
• einer zweiten elektrisch steuerbaren Druckbereitstellungseinrichtung (2), die mit der Bremsversorgungsleitung (13) verbunden ist, wobei zumindest ein elektrisch betätigbares Achstrennventil (40) vorgesehen ist, das hydraulisch in der Bremsversorgungsleitung (13) zwischen den Radbremsen (8c, 8d) für die Räder der ersten Fahrzeugachse (VA) und den Radbremsen (8a, 8b) für die Räder der zweiten Fahrzeugachse (HA) angeordnet ist,
• einer ersten elektrischen Einrichtung (100) mit elektrischen und/oder elektronischen Elementen, welche die erste Druckbereitstellungseinrichtung (5) ansteuert, und
• einer zweiten elektrische Einrichtung (110) mit elektrischen und/oder elektronischen Elementen, welche die zweite Druckbereitstellungseinrichtung (2) ansteuert,
**gekennzeichnet durch**
eine erste elektrische Partition (A) und eine zweite elektrische Partition (B), welche elektrisch unabhängig voneinander sind, wobei die erste Druckbereitstellungseinrichtung (5) und die erste elektrische Einrichtung (100) der ersten elektrischen Partition (A) zugeordnet sind und die zweite Druckbereitstellungseinrichtung (2), die zweite elektrische Einrichtung (110) und die Einlass- und Auslassventile (6a-6d, 7a-7d) der zweiten elektrischen Partition (B) zugeordnet sind, wobei die Einlass- und Auslassventile (6a-6d, 7a-7) von der zweiten elektrischen Einrichtung (110) angesteuert werden, und wobei das Achstrennventil (40) stromlos offen ausgeführt ist, der ersten elektrischen Partition (A) zugeordnet ist und von der ersten elektrischen Einrichtung (100) angesteuert wird.

2. Bremsanlage nach Anspruch 1, **dadurch gekennzeichnet, dass** die erste Druckbereitstellungseinrichtung (5) ausschließlich von der ersten elektrischen Einrichtung (100) angesteuert wird und die zweite Druckbereitstellungseinrichtung (2) sowie die Einlass- und Auslassventil (6a-6d, 7a-7d) ausschließlich von der zweiten elektrischen Einrichtung (110) angesteuert werden.

3. Bremsanlage nach Anspruch 1 oder 2, **dadurch gekennzeichnet, dass** das Achstrennventil (40) ausschließlich von der ersten elektrischen Einrichtung (100) angesteuert wird.

4. Bremsanlage nach einem der vorhergehenden Ansprüche, **dadurch gekennzeichnet, dass** das Achstrennventil (40) derart angeordnet ist, dass bei geschlossenem Achstrennventil die Bremsversorgungsleitung (13) in einen ersten Leitungsabschnitt (13a) und einen zweiten Leitungsabschnitt (13b) hydraulisch getrennt wird, wobei der erste Leitungsabschnitt (13a) mit der zweiten Druckbereitstellungseinrichtung (2) und den Einlassventilen (6a, 6b) der Radbremsen (8a, 8b) der Hinterachse (HA) des Kraftfahrzeugs verbunden ist und der zweite Leitungsabschnitt (13b) mit der ersten Druckbereitstellungseinrichtung (5) und den Einlassventilen (6c, 6d) der Radbremsen (8c, 8d) der Vorderachse (VA) des Kraftfahrzeugs verbunden ist.

5. Bremsanlage nach Anspruch 4, **dadurch gekennzeichnet, dass** bei geschlossenem Achstrennventil (40) die Bremsanlage in zwei hydraulische Bremskreise (I, II) aufgetrennt ist, wobei im ersten Bremskreis (I) die zweite Druckbereitstellungseinrichtung (2) mit nur den Radbremsen (8a, 8b) der Hinterachse (HA) verbunden ist, und im zweiten Bremskreis (II) die erste Druckbereitstellungseinrichtung (5) mit nur den Radbremsen (8c , 8d) der Vorderachse (VA) verbunden ist.

6. Bremsanlage nach einem der vorhergehenden Ansprüche, **dadurch gekennzeichnet, dass** dem Achstrennventil (40) ein zweites Achstrennventil (140) hydraulisch parallel geschaltet ist, wobei das zweite Achstrennventil (140) der zweiten elektrischen Partition (B) zugeordnet ist und von der zweiten elektrischen Einrichtung (110), insbesondere ausschließlich, angesteuert wird.

7. Bremsanlage nach einem der vorhergehenden Ansprüche, **dadurch gekennzeichnet, dass** die erste elektrische Einrichtung (100) von einer ersten elektrischen Energiequelle (57) versorgt wird und die zweite elektrische Einrichtung (110) von einer zweiten elektrischen Energiequelle (67) versorgt wird, welche von der ersten elektrischen Energiequelle (57) unabhängig ist.

8. Bremsanlage nach einem der vorhergehenden Ansprüche, **dadurch gekennzeichnet, dass** für jede der Radbremsen (8a-8d) ein erster Raddrehzahlsensor (10a-10d) vorgesehen ist, wobei die ersten Raddrehzahlsensoren (66) der zweiten elektrischen Partition (B) zugeordnet sind und, insbesondere ausschließlich, mit der zweiten elektrischen Einrichtung (110) verbunden sind und von dieser ausgewertet werden.

9. Bremsanlage nach einem der vorhergehenden Ansprüche, **dadurch gekennzeichnet, dass** eine erste Fahrdynamik-Sensorik (60) vorgesehen ist, welche der ersten elektrischen Partition (A) zugeordnet ist und, insbesondere ausschließlich, mit der ersten elektrischen Einrichtung (100) verbunden ist und von dieser ausgewertet wird.

10. Bremsanlage nach einem der vorhergehenden Ansprüche, **dadurch gekennzeichnet, dass** ein stromlos offenes, insbesondere analog regelbares, Überströmventil (32) zur Einstellung oder Regelung des von der zweiten Druckbereitstellungseinrichtung (2) bereitgestellten Druckes vorgesehen ist, welches der zweiten elektrischen Partition (B) zugeordnet ist und, insbesondere ausschließlich, von der zweiten elektrischen Einrichtung (B) angesteuert wird.

11. Bremsanlage nach Anspruch 10, **dadurch gekennzeichnet, dass** die zweite Druckbereitstellungseinrichtung (2) durch eine Kolbenpumpe, insbesondere Radial-Kolbenpumpe, mit einem Sauganschluss (23) und einem Druckanschluss (27) gebildet wird, wobei der Druckanschluss (27) über das Überströmventil (32) mit dem Sauganschluss (23) hydraulisch verbunden ist.

12. Verfahren zum Betrieb einer Bremsanlage nach einem der Ansprüche 1 bis 11, **dadurch gekennzeichnet, dass** in einem fehlerfreien Zustand der Bremsanlage die erste elektrische Einrichtung (100) mittels der ersten Druckbereitstellungseinrichtung (5) eine Betätigung der Radbremsen (8a-8d) durchführt, wobei die zweite elektrische Einrichtung (110) mittels der Einlass- und Auslassventile (6a,-6d, 7a-7d) radindividuelle Radbremsdrücke einstellt.

13. Verfahren zum Betrieb einer Bremsanlage nach einem der Ansprüche 1 bis 11, insbesondere nach Anspruch 12, **dadurch gekennzeichnet, dass** bei einem Ausfall in der ersten elektrischen Partition (A) die zweite elektrische Einrichtung (110) mittels der zweiten Druckbereitstellungseinrichtung (2) und der Einlass- und Auslassventile (6a,-6d, 7a-7d) eine Bremsung mit radindividuellen Radbremsdrücken durchführt.

14. Verfahren nach Anspruch 12 oder 13, **dadurch gekennzeichnet, dass** bei einem Ausfall in der zweiten elektrischen Partition (B) die erste elektrische Einrichtung (100) mittels der ersten Druckbereitstellungseinrichtung (5) und des Achstrennventils (40) eine Bremsung mit achsindividuellen Radbremsdrücken durchführt.

15. Verfahren nach Anspruch 14, **dadurch gekennzeichnet, dass** der Achsbremsdruck an der Hinterachse (HA) konstant gehalten wird, während der Achsbremsdruck an der Vorderachse moduliert wird.

## Claims

1. Brake system for a motor vehicle, having
• hydraulically actuatable wheel brakes (8a-8d) which are assigned to wheels (FL, FR) of a first vehicle axle (VA) and wheels (RL, RR) of a second vehicle axle (HA),
• an electrically actuatable inlet valve (6a-6d) and electrically actuatable outlet valve (7a-7d) for each wheel brake (8a-8d) for setting wheel-specific brake pressures,
• a first electrically controllable pressure provision device (5) which is connected to a brake supply line (13) to which the wheel brakes (8a-8d) are connected,
• a second electrically controllable pressure provision device (2) which is connected to the brake supply line (13), wherein at least one electrically actuatable axle separation valve (40) which is arranged hydraulically in the brake supply line (13) between the wheel brakes (8c, 8d) for the wheels of the first vehicle axle (VA) and the wheel brakes (8a, 8b) for the wheels of the second vehicle axle (HA) is provided,
• a first electrical device (100) with electrical and/or electronic elements, which activates the first pressure provision device (5), and
• a second electrical device (110) with electrical and/or electronic elements, which activates the second pressure provision device (2),
**characterized by**
a first electrical partition (A) and a second electrical partition (B) which are electrically independent of each other, wherein the first pressure provision device (5) and the first electrical device (100) are assigned to the first electrical partition (A) and the second pressure provision device (2), the second electrical device (110) and the inlet and outlet valves (6a-6d, 7a-7d) are assigned to the second electrical partition (B), wherein the inlet and outlet valves (6a-6d, 7a-7) are activated by the second electrical device (110), and wherein the axle separation valve (40) is of normally-open design, is assigned to the first electrical partition (A) and is activated by the first electrical device (100).

2. Brake system according to Claim 1, **characterized in that** the first pressure provision device (5) is activated exclusively by the first electrical device (100) and the second pressure provision device (2) and the inlet and outlet valves (6a-6d, 7a-7d) are activated exclusively by the second electrical device (110).

3. Brake system according to Claim 1 or 2, **characterized in that** the axle separation valve (40) is activated exclusively by the first electrical device (100).

4. Brake system according to any one of the preceding claims, **characterized in that** the axle separation valve (40) is arranged such that, when the axle separation valve is closed, the brake supply line (13) is hydraulically separated into a first line portion (13a) and a second line portion (13b), wherein the first line portion (13a) is connected to the second pressure provision device (2) and to the inlet valves (6a, 6b) of the wheel brakes (8a, 8b) of the rear axle (HA) of the motor vehicle, and the second line portion (13b) is connected to the first pressure provision device (5) and to the inlet valves (6c, 6d) of the wheel brakes (8c, 8d) of the front axle (VA) of the motor vehicle.

5. Brake system according to Claim 4, **characterized in that**, when the axle separation valve (40) is closed, the brake system is divided into two hydraulic brake circuits (I, II), wherein, in the first brake circuit (I), the second pressure provision device (2) is connected to only the wheel brakes (8a, 8b) of the rear axle (HA), and in the second brake circuit (II), the first pressure provision device (5) is connected to only the wheel brakes (8c, 8d) of the front axle (VA).

6. Brake system according to any of the preceding claims, **characterized in that** a second axle separation valve (140) is connected hydraulically in parallel with respect to the axle separation valve (40), wherein the second axle separation valve (140) is assigned to the second electrical partition (B) and is activated, in particular exclusively, by the second electrical device (110).

7. Brake system according to any of the preceding claims, **characterized in that** the first electrical device (100) is supplied by a first electrical energy source (57) and the second electrical device (110) is supplied by a second electrical energy source (67), which is independent of the first electrical energy source (57).

8. Brake system according to any of the preceding claims, **characterized in that** a first wheel speed sensor (10a-10d) is provided for each of the wheel brakes (8a-8d), wherein the first wheel speed sensors (66) are assigned to the second electrical partition (B) and are connected, in particular exclusively, to the second electrical device (110) and are evaluated by the latter.

9. Brake system according to any of the preceding claims, **characterized in that** a first driving dynamics sensor system (60) is provided which is assigned to the first electrical partition (A) and which is connected, in particular exclusively, to the first electrical device (100) and is evaluated by the latter.

10. Brake system according to any of the preceding claims, **characterized in that** a normally-open overflow valve (32), which is in particular controllable in analogue fashion, is provided for the adjustment or control of the pressure provided by the second pressure provision device (2), which overflow valve is assigned to the second electrical partition (B) and is activated, in particular exclusively, by the second electrical device (B).

11. Brake system according to Claim 10, **characterized in that** the second pressure provision device (2) is formed by a piston pump, in particular radial piston pump, with a suction port (23) and a pressure port (27), wherein the pressure port (27) is hydraulically connected via the overflow valve (32) to the suction port (23).

12. Method for operating a brake system according to any of Claims 1 to 11, **characterized in that**, in a fault-free state of the brake system, the first electrical device (100) performs an actuation of the wheel brakes (8a-8d) by means of the first pressure provision device (5), wherein the second electrical device (110) sets wheel-specific wheel brake pressures by means of the inlet and outlet valves (6a-6d, 7a-7d).

13. Method for operating a brake system according to any of Claims 1 to 11, in particular according to Claim 12, **characterized in that**, in the event of a failure in the first electrical partition (A), the second electrical device (110) performs a braking operation with wheel-specific wheel brake pressures by means of the second pressure provision device (2) and the inlet and outlet valves (6a-6d, 7a-7d).

14. Method according to Claim 12 or 13, **characterized in that**, in the event of a failure in the second electrical partition (B), the first electrical device (100) performs a braking operation with axle-specific wheel brake pressures by means of the first pressure provision device (5) and the axle separation valve (40).

15. Method according to Claim 14, **characterized in that** the axle brake pressure at the rear axle (HA) is kept constant, whilst the axle brake pressure at the front axle is modulated.

## Revendications

1. Système de freinage destiné à un véhicule automobile, ledit système de freinage comprenant
• des freins de roue à actionnement hydraulique (8a-8d) qui sont associés à des roues (FL, FR) d'un premier essieu de véhicule (VA) et à des roues (RL, RR) d'un deuxième essieu de véhicule (HA),
• une soupape d'admission à commande électrique (6a-6d) et une soupape de sortie à commande électrique (7a-7d) pour chaque frein de roue (8a-8d) afin de régler des pressions de freinage propres aux roues,
• un premier dispositif d'alimentation en pression à commande électrique (5) qui est relié à une conduite d'alimentation de frein (13) à laquelle sont raccordés les freins de roue (8a-8d),
• un deuxième dispositif d'alimentation en pression à commande électrique (2) qui est relié à la conduite d'alimentation de frein (13), au moins une soupape de séparation d'essieu à commande électrique (40) étant prévue qui est disposée hydrauliquement dans la conduite d'alimentation de frein (13) entre les freins de roue (8c, 8d) destinés aux roues du premier essieu de véhicule (VA) et les freins de roue (8a, 8b) destinés aux roues du deuxième essieu de véhicule (HA),
• un premier dispositif électrique (100) qui comprend des éléments électriques et/ou électroniques et qui commande le premier dispositif d'alimentation en pression (5), et
• un deuxième dispositif électrique (110) qui comprend des éléments électriques et/ou électroniques et qui commande le deuxième dispositif d'alimentation en pression (2),
**caractérisé par**
une première partition électrique (A) et une deuxième partition électrique (B), qui sont électriquement indépendantes l'une de l'autre, le premier dispositif d'alimentation en pression (5) et le premier dispositif électrique (100) étant associés à la première partition électrique (A) et le deuxième dispositif d'alimentation en pression (2), le deuxième dispositif électrique (110) et les soupapes d'admission et de sortie (6a-6d, 7a-7d) étant associés à la deuxième partition électrique (B), les soupapes d'admission et de sortie (6a-6d, 7a-7) étant commandées par le deuxième dispositif électrique (110), et la soupape de séparation d'essieu (40) étant conçue pour être ouverte lorsqu'elle n'est pas alimentée en courant, étant associée à la première partition électrique (A) et étant commandée par le premier dispositif électrique (100).

2. Système de freinage selon la revendication 1, **caractérisé en ce que** le premier dispositif d'alimentation en pression (5) est commandé exclusivement par le premier dispositif électrique (100) et le deuxième dispositif d'alimentation en pression (2) et les soupapes d'admission et de sortie (6a-6d, 7a-7d) sont commandés exclusivement par le deuxième dispositif électrique (110).

3. Système de freinage selon la revendication 1 ou 2, **caractérisé en ce que** la soupape de séparation d'essieu (40) est commandée exclusivement par le premier dispositif électrique (100).

4. Système de freinage selon l'une des revendications précédentes, **caractérisé en ce que** la soupape de séparation d'essieu (40) est disposée de manière que, lorsque la soupape de séparation d'essieu est fermée, la conduite d'alimentation de frein (13) soit séparée hydrauliquement en une première portion de conduite (13a) et une deuxième portion de conduite (13b), la première portion de conduite (13a) étant reliée au deuxième dispositif d'alimentation en pression (2) et aux soupapes d'admission (6a, 6b) des freins de roue (8a, 8b) de l'essieu arrière (HA) du véhicule automobile et la deuxième portion de conduite (13b) étant reliée au premier dispositif d'alimentation en pression (5) et aux soupapes d'admission (6c, 6d) des freins de roue (8c, 8d) de l'essieu avant (VA) du véhicule automobile.

5. Système de freinage selon la revendication 4, **caractérisé en ce que**, lorsque la soupape de séparation d'essieu (40) est fermée, le système de freinage est séparé en deux circuits hydrauliques de freinage (I, II), dans le premier circuit de freinage (I) le deuxième dispositif d'alimentation en pression (2) étant relié uniquement aux freins de roue (8a, 8b) de l'essieu arrière (HA), et dans le deuxième circuit de freinage (II) le premier dispositif d'alimentation en pression (5) étant relié uniquement aux freins de roue (8c, 8d) de l'essieu avant (VA).

6. Système de freinage selon l'une des revendications précédentes, **caractérisé en ce qu'**une deuxième soupape de séparation d'essieu (140) est montée hydrauliquement en parallèle avec la soupape de séparation d'essieu (40), la deuxième soupape de séparation d'essieu (140) étant associée à la deuxième partition électrique (B) et étant commandée, en particulier exclusivement, par le deuxième dispositif électrique (110).

7. Système de freinage selon l'une des revendications précédentes, **caractérisé en ce que** le premier dispositif électrique (100) est alimenté par une première source d'énergie électrique (57) et le deuxième dispositif électrique (110) est alimenté par une deuxième source d'énergie électrique (67) qui est indépendante de la première source d'énergie électrique (57).

8. Système de freinage selon l'une des revendications précédentes, **caractérisé en ce qu'**un premier capteur de vitesse de rotation de roue (10a-10d) est prévu pour chacun des freins de roue (8a-8d), les premiers capteurs de vitesse de rotation de roue (66) étant associés à la deuxième partition électrique (B) et étant reliés, en particulier exclusivement, au deuxième dispositif électrique (110) et étant évalués par celui-ci.

9. Système de freinage selon l'une des revendications précédentes, **caractérisé en ce qu'**il est prévu un premier capteur de dynamique de roulement (60) qui est associé à la première partition électrique (A) et est relié, notamment exclusivement, au premier dispositif électrique (100) et est évalué par celui-ci.

10. Système de freinage selon l'une des revendications précédentes, **caractérisé en ce qu'**une soupape de surcharge (32), qui est ouverte lorsqu'elle n'est pas alimentée en courant et qui peut être régulée notamment de manière analogique, est prévue pour régler ou réguler la pression fournie par le deuxième dispositif d'alimentation en pression (2) et est associée à la deuxième partition électrique (B) et est commandée, notamment exclusivement, par le deuxième dispositif électrique (B).

11. Système de freinage selon la revendication 10, **caractérisé en ce que** le deuxième dispositif d'alimentation en pression (2) est formé par une pompe à piston, notamment une pompe à piston radial, qui comprend un raccord d'aspiration (23) et un raccord de pression (27), le raccord de pression (27) étant relié hydrauliquement au raccord d'aspiration (23) par le biais de la soupape de surcharge (32).

12. Procédé de fonctionnement d'un système de freinage selon l'une des revendications 1 à 11, **caractérisé en ce que**, lorsque le système de freinage est dans un état sans défaut, le premier dispositif électrique (100) réalise un actionnement des freins de roue (8a-8d) au moyen du premier dispositif d'alimentation en pression (5), le deuxième dispositif électrique (110) réglant les pressions de freinage propres aux roues au moyen des soupapes d'admission et de sortie (6a, -6d, 7a-7d).

13. Procédé de fonctionnement d'un système de freinage selon l'une des revendications 1 à 11, notamment selon la revendication 12, **caractérisé en ce que**, en cas de panne de la première partition électrique (A), le deuxième dispositif électrique (110) effectue un freinage avec des pressions de freinage propres aux roues au moyen du deuxième dispositif d'alimentation en pression (2) et des soupapes d'admission et de sortie (6a,-6d, 7a-7d).

14. Procédé selon la revendication 12 ou 13, **caractérisé en ce que**, en cas de panne de la deuxième partition électrique (B), le premier dispositif électrique (100) effectue un freinage avec des pressions de freinage de roue propres aux essieux au moyen du premier dispositif d'alimentation en pression (5) et de la soupape de séparation d'essieu (40).

15. Procédé selon la revendication 14, **caractérisé en ce que** la pression de freinage d'essieu sur l'essieu arrière (HA) est maintenue constante tandis que la pression de freinage d'essieu sur l'essieu avant est modulée.
